(19) Europäisches Patentamt
European Patent Office
Office européen des brevets

(11) EP 3 310 735 B1

(12) # EUROPÄISCHE PATENTSCHRIFT

(45) Veröffentlichungstag und Bekanntmachung des Hinweises auf die Patenterteilung:
**06.02.2019 Patentblatt 2019/06**

(21) Anmeldenummer: **16726557.8**

(22) Anmeldetag: **31.05.2016**

(51) Int Cl.:
***C04B 26/06*** (2006.01) ***C08F 220/56*** (2006.01)
***C08F 220/58*** (2006.01) ***C09K 8/508*** (2006.01)

(86) Internationale Anmeldenummer:
**PCT/EP2016/062287**

(87) Internationale Veröffentlichungsnummer:
**WO 2016/202580 (22.12.2016 Gazette 2016/51)**

(54) **VERFAHREN ZUR HERSTELLUNG VON POLYMEREN AUF BASIS VON ACRYLOYLDIMETHYLTAURAT UND NEUTRALEN MONOMEREN**

METHOD FOR PRODUCING POLYMERS ON THE BASIS OF ACRYLOYLDIMETHYL TAURATE AND NEUTRAL MONOMERS

PROCÉDÉ DE FABRICATION DE POLYMÈRES À BASE D'ACRYLOYLDIMÉTHYLTAURATE ET DE MONOMÈRES NEUTRES

(84) Benannte Vertragsstaaten:
**DE ES FR GB NL NO**

(30) Priorität: **17.06.2015 EP 15001794**

(43) Veröffentlichungstag der Anmeldung:
**25.04.2018 Patentblatt 2018/17**

(73) Patentinhaber: **Clariant International Ltd**
**4132 Muttenz (CH)**

(72) Erfinder:
- **KAYSER, Christoph**
**55127 Mainz (DE)**
- **FISCHER, Dirk**
**55278 Hahnheim (DE)**
- **DIEMEL, Claudia**
**63571 Gelnhausen (DE)**
- **BERZ, Katharina**
**63500 Seligenstadt (DE)**

(74) Vertreter: **Mikulecky, Klaus**
**Clariant Produkte (Deutschland) GmbH**
**Patent & License Management Chemicals**
**Industriepark Höchst, G 860**
**65926 Frankfurt am Main (DE)**

(56) Entgegenhaltungen:
**EP-A2- 0 816 403** **WO-A1-99/26991**
**US-A1- 2004 097 657**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft ein Verfahren zur Herstellung von wasserlöslichen oder wasserquellbaren Polymeren auf Basis von Sulfon-, Phosphonsäuren oder deren Salzen, neutralen Monomeren, sowie die Verwendung dieser Polymere als Wasserverlustreduzierer in Zementschlämmen zur Zementation von Tiefbohrungen, und als Additiv in Bohrspülungen für Tiefbohrungen zur Reduzierung des Wasserverlustes an der Bohrlochswandung.

Bei Tiefbohrungen zur Erschließung von Erdöl- und Erdgaslagerstätten ist die Verwendung von Bohrspülungen und Zementschlämmen notwendig. Während des Bohrvorgangs werden sog. Bohrspülungen verwendet, deren Aufgabe es unter anderem ist, das Bohrklein an die Oberfläche zu fördern und den Bohrkopf zu kühlen. Während des Bohrvorganges kann die Bohrung poröse Gesteinsschichten durchlaufen. Dadurch kann es zur Wasserabgabe der Bohrspülung an das poröse Gestein kommen. Um dies zu verhindern werden Additive wie Wasserverlustreduzierer, sogenannte "Fluid Loss Additive" eingesetzt.

Nachdem das Bohrloch eine bestimmte Teufe erreicht hat, werden sog. Futterrohre in das Bohrloch eingebracht. Zu diesem Zweck müssen die Futterrohre fixiert werden, d. h. in den Hohlraum zwischen dem Gebirge und den Futterrohren wird eine Zementschlämme eingepumpt, die zu einem festen Gestein aushärtet. Die Wasserabgabe des Zementschlammes an das poröse Gestein während des Pumpvorganges soll niedrig sein, damit sich an der Bohrlochwand keine dicken Filterkuchen bilden, die den Pumpdruck aufgrund der Ringraumverengung so stark erhöhen würden, dass das poröse Gestein aufbricht. Außerdem würde der Zementschlamm bei zu hoher Wasserabgabe nicht optimal abbinden und für Gas und Öl durchlässig werden. Anderseits muss der sich bildende Zementmantel im Ringraum möglichst schnell eine ausreichende Festigkeit erreichen und beim Abbinden darf keine Schrumpfung auftreten, die zu Fließkanälen für Gas, Öl und Wasser führt. Eine optimale Einstellung der Eigenschaften des Zementschlammes ist nur durch Additive möglich. Die wichtigsten Additive sind Verzögerer, Beschleuniger, Dispergatoren und Wasserverlustreduzierer.

Synthetische Polymere auf Basis des Monomers Acryloyldimethyltaurat haben sich als wirksame Wasserverlustreduzierer in Bohrspülungen und als Wasserverlustreduzierer in Zement- und Gipsschlämmen besonders etabliert.

US-5472051 beschreibt Polymere aus Acryloyldimethyltaurat und Acrylsäure mit Molekulargewichten kleiner als 5000 g/mol und deren Anwendung als Wasserverlustreduzierer.

In EP-1045869 werden Polymere aus Acryloyldimethyltaurat und Acrylamid beschrieben und deren Anwendung als Wasserverlustreduzierer. Diese Polymere werden mit Hilfe einer Fällungsolymerisation als Ammoniumsalz des Acryloyldimethyltaurat in tert.-Butanol hergestellt. Die Herstellung eines Natriumsalzes ist nicht beschrieben bzw. nicht möglich (Vergleichsbeispiel 1).

EP-0116671 offenbart die Einführung von 5 - 60 Gew-% von Vinylamiden (z. B. N-Vinyl-Methylacetamid) in Acryloyldimethyltaurat-haltigen Polymeren. Dadurch konnte der Hochtemperaturbereich der Anwendung wesentlich erweitert werden.

US-5025040 beschreibt Polymere aus Acryloyldimethyltaurat, Acrylamid und mindestens 20 % N-Vinylimidazol.

EP-0217608, US-4555269 und EP-0157055 beschreiben ein Copolymer aus Acryloyldimethyltaurat und Dimethylacrylamid im molaren Verhältnis von 1:4 bis 4:1 als Fluid Loss Additiv für salzhaltige (ungefähr 10 Gew.-%) Zementschlämme und die Verwendung von Acryloyldimethyltaurat und Acrylsäure im molaren Verhältnis von 1:4 bis 4:1 für den gleichen Zweck.

EP-1059316 beschreibt die Verwendung von Polymeren enthaltend Acryloyldimethyltaurat, Vinylphosphonsäure und kationische Monomere, deren Herstellung und die Verwendung als Wasserverlustreduzierer.

US-5336316 lehrt eine Zementzusammensetzung für Öl- und Gasquellen, die einen Zement, Wasser und ein Additiv umfasst. Das Additiv ist ein Polymer, welches Phosphonatgruppen gebunden an ein Polymerrückgrat enthält. Das Additiv verleiht den Zementzusammensetzungen verbesserte Wasserverlust- und Abbindeeigenschaften.

Die synthetischen Poly(acryloyldimethyltaurat)-Copolymere können bei der industriellen Herstellung in zwei verschiedenen physikalischen Formen anfallen, als Pulver und in flüssiger Form. Unter der flüssigen Form sind Polymerlösungen zu verstehen, wie beispielsweise Polymeremulsionen oder Dispersionen, in denen das Polymer in einem Lösemittel gelöst oder durch den Einsatz eines Emulgators dispergiert vorliegt.

Poly(acryloyldimethyltaurat)-Copolymere in Pulverform wurden kürzlich in den Patentanmeldungen US-5373044, US-2798053, EP-1045869, EP-301532, EP-816403, EP-1116733 und EP-1069142 beschrieben. Alle diese Polymere auf Basis von Acryloyldimethyltaurat werden mit Hilfe einer Fällungspolymerisation erhalten. Hierbei werden die verwendeten Monomere in einem organischen Lösemittel, wie Toluol, Ethylacetat, Hexan, Cyclohexan, Ethanol oder 2-Methylpropan-2-ol vorgelegt. Der Nachteil dieser organischen Lösemittel ist meist, dass sich das Acryloyldimethyltaurat darin nicht vollständig löst und es nach der Polymerisation zu hohen Restmonomer-Anteilen der erhaltenen Polymere kommt. Zudem werden meist keine hohen molaren Massen erreicht, da das Polymer während der Polymerisation im Lösemittel zu schnell unlöslich wird.

Poly(acryloyldimethyltaurat)-Copolymere die mit Hilfe einer Fällungspolymerisation hergestellt wurden, haben im Vergleich zur inversen Emulsionspolymerisation den Vorteil, dass im finalen Produkt keine Reste von Öl und den Emulgatoren vorliegen. Die eingesetzten Öle und die eingesetzten Emulgatoren in den genannten Polymerisationsverfahren können zum Teil Hautirritationen hervorrufen. Zudem haben die Polymere, die mit Hilfe einer inversen Emulsionspolymerisation hergestellt wurden, meist den Nachteil, dass das im Polymer enthaltene Öl aus dem Verfahren zu Eintrübungen in wässrigen Polymerlösungen führt.

In WO-2010/108634, WO-2012/119747, WO-2012/119746, EP-1045869, EP-0816403, EP-2227498, US-7151137 und WO-0244268 werden unter anderem Verfahren zur Herstellung von Poly(acryloyldimethyltaurat)-Copolymeren mit Hilfe einer Fällungspolymerisation in 2-Methylpropan-2-ol beschrieben.

Die Verwendung von 2-Methylpropan-2-ol oder 2-Methylpropan-2-ol/Wasser Gemischen macht es notwendig, das Acryloyldimethyltaurat mit gasförmigem Ammoniak oder einem ammoniumhaltigen Salz zu neutralisieren, da dies die einzigen Salze des Acryloyldimethyltaurats sind, die in 2-Methylpropan-2-ol in ausreichender Weise löslich sind, damit Polymere vom gewünschten Molekulargewicht entstehen können. Die geringe Löslichkeit dieser Alkali- oder Erdalkali-Salze von Poly(acryloyldimethyltaurat)-Copolymeren beeinflusst auf negative Weise das Molekulargewicht der erhaltenen Polymere und deren Performance.

In EP-1033378 wird ein Verfahren zur Herstellung von Poly(acryloyldimethyltaurat)-Copolymer Ammoniumsalz in 2-Methylpropan-2-ol beschrieben. Die hergestellten Polymere wurden in mit Schwerspat beschwerten Meerwasserbohrspülungen mit 3 % KCl und einem spezifischen Gewicht von 2,1 kg/l eingesetzt (Vergleichsbeispiel 2 und 3)

Die Verwendung von Ammoniumsalzen der Poly(acryloyldimethyltaurat)-Copolymere in Zementschlämmen oder alkalischen Bohrspülungen haben aufgrund der hohen herrschenden pH-Werte (pH >10) den entscheidenden Nachteil, dass es zur Freisetzung von Ammoniakgas kommt. Dies hat zur Folge, dass am Einsatzort ein unangenehmer, reizender Geruch wahrgenommen wird, der durch die Freisetzung des toxischen Ammoniaks in die Umwelt hervorgerufen wird. Es macht spezielles technisches Equipment erforderlich, um beispielsweise eine Personengefährdung oder die Freisetzung dieses Gases in die Umwelt auszuschließen. Ebenso behindert die ungewollte Freisetzung von Ammoniakgas die Verwendung von Gassensoren an Erdöl und Erdgas Bohranlagen.

Die Aufgabe der vorliegenden Erfindung war es daher, ein Verfahren zur Herstellung von Polymeren und Co-Polymeren des Acryloyldimethyltaurats bereitzustellen, mit deren Hilfe die Metallsalze, vorzugsweise Alkali- und Erdalkalisalze, dieser Polymere und Co-Polymere direkt darstellbar sind. Diese Polymere und Co-Polymere sollen eine verbesserte Performance in der Anwendung als Wasserverlustreduzierer in Zementschlämmen oder als Additiv in Bohrspülungen zeigen. Bei ihrer Anwendung kommt es nicht zur Freisetzung von Ammoniak, wie es für die Wasserverlustreduzierer des Standes der Technik üblich war.

Überraschenderweise wurde nun gefunden, dass lineare oder verzweigte, Polymere oder Co-Polymere des Acryloyldimethyltaurats, die als Metallsalze, vorzugsweise Alkali- oder Erdalkalisalze, frei von Ammoniumsalzen sind, mit Hilfe eines Verfahrens hergestellt werden können, indem das Acryloyldimethyltaurat als neutralisiertes Metallsalz, vorzugsweise Alkali-Salz oder Erdalkali-Salz, insbesondere vorzugsweise als Natrium-Salz polymerisiert wird.

Gegenstand der vorliegenden Erfindung ist ein Verfahren zur Herstellung von wasserlöslichen oder wasserquellbaren Polymeren, enthaltend

a) 5 bis 98 Mol-%, vorzugsweise von 20 bis 80 Mol-% einer oder mehrerer wiederkehrender Struktureinheiten der Formel (1)

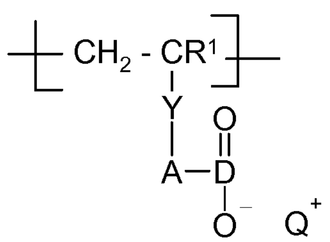

(1)

worin

| | |
|---|---|
| $R^1$, $R^2$, $R^3$ | Wasserstoff, Methyl oder Ethyl, |
| Y | eine chemische Bindung, O, $CH_2$, $C(CH_3)H$, $C(O)NR^2$ bedeutet, |
| A | eine chemische Bindung, O, Arylen, Phenylen, lineares oder verzweigtes $C_1$-$C_{12}$-Alkylen, eine lineare Mono-Hydroxyalkylengruppe mit 2 bis 6 Kohlenstoffatomen oder eine lineare oder verzweigte Di-Hydroxyalkylengruppe mit 3 bis 6 Kohlenstoffatomen bedeutet, |
| D | S(O), POH, $POR^3$ oder $PO^-Q^+$ bedeutet |
| $Q^+$ | für $H^+$, $Li^+$, $Na^+$, $K^+$, ½$Ca^{++}$, ½$Mg^{++}$, ½$Zn^{++}$, ⅓$Al^{+++}$, ¼$Zr^{++++}$- oder für Mischungen aus diesen Ionen steht, |

b) 2 bis 95 Mol-%, vorzugsweise 20 bis 80 Mol-% einer oder mehrerer voneinander unabhängiger wiederkehrender neutraler Struktureinheiten, in dem die Monomere, aus denen sich die Struktureinheiten a) und b) ableiten, in einem polaren Lösungsmittel oder Lösungsmittelgemisch, in Fällung radikalisch polymerisiert werden, mit der Maßgabe, dass, das polare Lösemittel oder Lösemittelgemisch 2-Methyl-2-propanol und ein $C_3$-$C_5$ Keton enthält.

Die Monomere, die die Struktureinheiten a) hervorbringen, werden in einer Ausführungsform als $Li^+$, $Na^+$, $K^+$, $Ca^{++}$, $Mg^{++}$, $Zn^{++}$, $Al^{+++}$, $Zr^{++++}$-Salze eingesetzt. In einer anderen Ausführungsform werden sie vor der Polymerisation, oder das erhaltene Polymer nach der Polymerisation mit einer $Li^+$-, $Na^+$-, $K^+$-, $Ca^{++}$-, $Mg^{++}$-, $Zn^{++}$- $Al^{+++}$ oder $Zr^{++++}$-enthaltenden Base vorzugsweise mit den entsprechenden Hydroxiden, Hydrogencarbonaten und Carbonaten, neutralisiert.

Die nach dem erfindungsgemäßen Verfahren hergestellten Polymere, werden im Folgenden als "Polymer D", oder als "Polymere D" bezeichnet.

Die gewichtsmittleren Molekulargewichte dieser Polymere D betragen vorzugsweise 300.000 bis 5.000.000, bevorzugt 500.000 bis 4.000.000, insbesondere 600.000 bis 2.500.000 g/mol. Die gewichtsmittleren Molekulargewichte können mit Hilfe der Gel Permeation Chromatographie (GPC) ermittelt werden. Die Verfahrensweise zur Bestimmung des gewichtsmittleren Molekulargewichtes mit Hilfe der GPC ist in "Makromolekulare Chemie: Eine Einführung" von Bernd Tieke, Wiley-VCH, 2. vollständig überarbeitete und erweiterte Auflage (9. September 2005) ISBN-10: 3527313796 ausführlich in Kapitel 3 beschrieben. Die Polymere werden gegen einen Polystyrolsulfonat Standard gemessen.

Als Indikator für das Molekulargewicht dienen die relative Viskosität bzw. der k-Wert. Zur Bestimmung des k-Wertes wird das Polymer D in einer Konzentration von (0,5 Gew.-%) in destilliertem Wasser gelöst und mittels Ubbelohde Viskosimeter die Ausflusszeit bei 20 °C ermittelt. Dieser Wert ergibt die absolute Viskosität der Lösung ($\eta_c$). Die absolute Viskosität des Lösemittels ist ($\eta_0$). Das Verhältnis beider absoluten Viskositäten ergibt die relative Viskosität:

$$Z = \frac{n_c}{n_0}$$

Aus der relativen Viskosität Z und der Konzentration C kann der k-Wert mittels der folgenden Gleichung ermittelt werden:

$$\mathrm{Lg}\, z = \left(\frac{75 * k^2}{1 + 1{,}5kc} + k\right) * c$$

Der k-Wert der Polymere D beträgt vorzugsweise von 100 bis 300, weiter vorzugsweise von 150 bis 270 und insbesondere bevorzugt von 180 bis 250.

Die Polymere D können jeweils verschiedene Struktureinheiten der Formel (1) oder der Komponente b) enthalten. Ein Polymer D kann beispielsweise mehrere Struktureinheiten enthalten, die sich von polymerisierbaren Sulfonsäuren oder Phophonsäuren der Formel (1) ableiten. Ein weiteres Polymer D kann beispielsweise auch mehrere neutrale Struktureinheiten der Komponente b) enthalten, die sich beispielsweise durch unterschiedliche Reste $R^1$ unterscheiden. Im Folgenden sind Bezüge auf Struktureinheiten a) oder b) stets so zu verstehen, dass sie sowohl den Fall einer solchen Struktureinheit, als auch den Fall von zwei oder mehr solcher Struktureinheiten beschreiben.

Bevorzugt sind die Struktureinheiten der Formel (1) der Polymere D abgeleitet von Monomeren aus der Gruppe bestehend aus Acryloyldimethyltaurat, Acryloyl-1,1-dimethyl-2methyltaurat, Acryloyltaurat, Acryloyl-N-methyltaurat, 3-Allyloxy-2-hydroxy-1-propansulphonsäure , Vinylsulfonsäure, Styrolsulfonsäure, Vinylphosphonsäure, 2-Acrylamido-2-methylpropanphosphonsäure, insbesondere vorzugsweise Acryloyldimethyltaurat, Vinylsulfonsäure, Vinylphosphonsäure und Styrolsulfonsäure.

Vorzugsweise ist der Neutralisationsgrad der Struktureinheiten der Formel (1) der Polymere D von 50,0 bis 100 Mol-%, besonders bevorzugt von 80,0 bis 100 Mol-%, insbesondere bevorzugt von 90,0 bis 100 Mol-% und außerordentlich bevorzugt von 95,0 bis 100 Mol-%.

In den Struktureinheiten der Formel (1) der Polymere D ist das von $H^+$ verschiedene Gegenion $Q^+$ vorzugsweise ein Alkalimetallion, wobei darunter $Na^+$ bevorzugt ist, ein Erdalkalimetallion und Mischungen aus diesen Ionen. Besonders bevorzugt ist das von $H^+$ verschiedene Gegenion $Q^+Na^+$.

Die voneinander unabhängigen, wiederkehrenden, neutralen Struktureinheiten leiten sich vorzugsweise ab von funktionalisierten Acryl- oder Methacrylsäureestern, Acryl- oder Methacrylsäureamiden, Polyglykolacryl- oder -methacrylsäureestern, Polyglykoldacryl- oder methacrylsäureamiden, Dipropylenglykolacryl- oder methacrylsäureestern, Dipropylenglykolacryl- oder methacrylsäureamiden, ethoxylierten Fettalkoholacrylaten oder -methacrylaten, propoxylierten Fettalkoholacrylaten oder linearen oder cyclischen N-Vinylamiden oder N-Methvinyl amiden.

Die Struktureinheiten der Komponente b) leiten sich vorzugsweise von Monomeren der allgemeinen Formel

(2) ab,

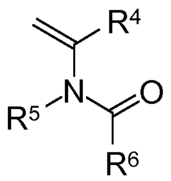

(2)

worin

$R^4$, $R^5$, $R^6$ eine lineare oder verzweigte Alkylgruppe mit 1 bis 6 Kohlenstoffatomen bedeutet

Besonders bevorzugte Struktureinheiten der Formel (2) sind abgeleitet von Monomeren aus der Gruppe bestehend aus N-Vinylformamid, N-Vinylacetamid, N-Methyl-N-Vinylformamid, N-Methyl-N-Vinylacetamid.

Weiterhin bevorzugt leiten sich die Struktureinheiten der Komponente b) von Monomeren der allgemeinen Formel (3) ab,

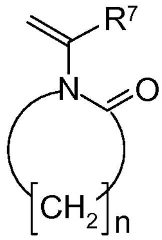

(3)

worin

$R^7$ Wasserstoff, Methyl oder Ethyl, und
n eine ganze Zahl von 3 - 5 bedeuten.

Besonders bevorzugte Struktureinheiten der Formel (3) sind abgeleitet von Monomeren aus der Gruppe bestehend aus N-Vinyl-2-pyrrolidon (NVP) und N-Vinylcaprolactam.

In einer weiteren bevorzugten Ausführungsform der Polymere D leiten sich die Struktureinheiten der Komponente b) von Monomeren der allgemeinen Formel (4) ab,

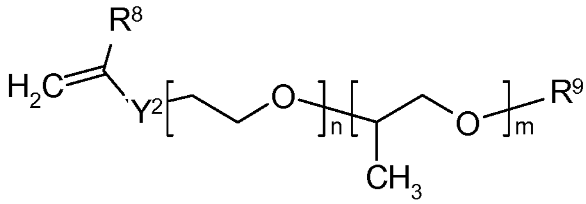

(4)

worin

| | |
|---|---|
| $R^8$ | Wasserstoff, Methyl oder Ethyl bedeutet, |
| $R^9$ | H, eine lineare oder verzweigte Alkylgruppe mit 1 bis 50 Kohlenstoffatomen, eine lineare oder verzweigte Mono-Hydroxyalkylgruppe mit 2 bis 6 Kohlenstoffatomen, eine lineare oder verzweigte Di-Hydroxyalkylgruppe mit 2 bis 6 Kohlenstoffatomen, $-(CO-O-R^{12}-)_oR^{13}$ oder $-(CO-NR^{11}-R^{12}-)_pR^{13}$ bedeutet, |
| m, n, o und p | jeweils unabhängig voneinander eine ganze Zahl von 0 bis 300 bedeuten, |
| $Y^2$ | eine chemische Bindung, O, $CH_2$, C(O)O, OC(O), $C(O)NR^{10}$ oder $NR^{10}C(O)$ bedeutet, |
| $R^{10}$, $R^{11}$, $R^{12}$ | jeweils unabhängig voneinander Wasserstoff oder einen linearen oder verzweigten Alkylrest mit 1 bis 50 C-Atomen bedeuten, |
| $R^{13}$ | einen linearen oder verzweigten Alkylenrest mit 1 bis 50 C-Atomen bedeutet. |

In den Verbindungen der Formel (4) ist $R^8$ vorzugsweise Wasserstoff oder Methyl.

In den Verbindungen der Formel (4) ist $R^9$ vorzugsweise H, eine lineare oder verzweigte Alkylgruppe mit 1 bis 50 Kohlenstoffatomen, eine lineare oder verzweigte Mono-Hydroxyalkylgruppe mit 2 bis 6 Kohlenstoffatomen oder eine lineare oder verzweigte Di-Hydroxyalkylgruppe mit 2 bis 6 Kohlenstoffatomen.

In den Verbindungen der Formel (4) bedeutet $Y^2$ vorzugsweise OC(O), C(O)$NR^{10}$ oder $NR^{10}$C(O).

Besonders bevorzugte Struktureinheiten der Formel (4) sind abgeleitet von Monomeren aus der Gruppe bestehend aus Vinylacetat, Methylvinylether, Ethylvinylether, Methylallylether, Ethylmethallylether, Methylmethallylether, Ethylallylether, tert.-Butyl acrylamid, N,N-Diethylacrylamid, N,N-Dimethylacrylamid, N,N-Dimethylmethacrylamid, N,N-Dipropylacrylamid, N-Isopropylacrylamid, N-Propylacrylamid, Acrylamid, Methacrylamid, Methylacrylat, Methymethylacrylat, tert-Butylacrylat, tert.-Butylmethacrylat, n-Butylacrylat, n-Butylmethacrylat, Laurylacrylat, Laurylmethacrylat, Behenylacrylat, Behenylmethacrylat, Cetylacrylat, Cetylmethacrylat, Stearylacrylat, Stearylmethacrylat, Tridecylacrylat, Tridecylmethacrylat, Polyethoxy-(5)-methacrylat, Polyethoxy-(5)-acrylat, Polyethoxy-(10)-methacrylat, Polyethoxy-(10)-acrylat, Behenylpolyethoxy-(7)-methacrylat, Behenylpolyethoxy-(7)-acrylat, Behenylpolyethoxy-(8)-methacrylat, Behenylpoly-ethoxy-(8)-acrylat, Behenylpolyethoxy-(12)-methacrylat, Behenylpoly-ethoxy-(12)-acrylat, Behenylpolyethoxy-(16)-methacrylat, Behenylpolyethoxy-(16)-acrylat, Behenylpolyethoxy-(25)-methacrylat, Behenylpolyethoxy-(25)-acrylat, Laurylpoly-ethoxy-(7)-methacrylat, Laurylpolyethoxy-(7)-acrylat, Laurylpolyethoxy-(8)-methacrylat, Laurylpolyethoxy-(8)-acrylat, Laurylpolyethoxy-(12)-methacrylat, Laurylpolyethoxy-(12)-acrylat, Laurylpolyethoxy-(16)-methacrylat, Laurylpolyethoxy-(16)-acrylat, Laurylpolyethoxy-(22)-methacrylat, Laurylpolyethoxy-(22)-acrylat, Laurylpolyethoxy-(23)-methacrylat, Laurylpolyethoxy-(23)-acrylat, Cetylpolyethoxy-(2)-methacrylat, Cetylpolyethoxy-(2)-acrylat, Cetylpolyethoxy-(7)-methacrylat, Cetylpolyethoxy-(7)-acrylat, Cetylpolyethoxy-(10)-methacrylat, Cetylpolyethoxy-(10)-acrylat, Cetylpolyethoxy-(12)-methacrylat, Cetylpolyethoxy-(12)-acrylat Cetylpoly-ethoxy-(16)-methacrylat, Cetylpolyethoxy-(16)-acrylat Cetylpolyethoxy-(20)-methacrylat, Cetylpolyethoxy-(20)-acrylat, Cetylpolyethoxy-(25)-methacrylat, Cetylpolyethoxy-(25)-acrylat, Cetylpolyethoxy-(25)-methacrylat, Cetylpolyethoxy-(25)-acrylat, Stearyl polyethoxy-(7)-methacrylat, Stearylpolyethoxy-(7)-acrylat, Stearylpoly-ethoxy-(8)-methacrylat, Stearylpolyethoxy-(8)-acrylat, Stearylpolyethoxy-(12)-methacrylat, Stearylpolyethoxy-(12)-acrylat, Stearylpolyethoxy-(16)-methacrylat, Stearylpolyethoxy-(16)-acrylat, Stearylpolyethoxy-(22)-methacrylat, Stearylpoly-ethoxy-(22)-acrylat, Stearylpolyethoxy-(23)-methacrylat, Stearylpolyethoxy-(23)-acrylat, Stearylpolyethoxy-(25)-methacrylat, Stearylpolyethoxy-(25)-acrylat, Tridecylpolyethoxy-(7)-methacrylat, Tridecylpolyethoxy-(7)-acrylat, Tridecylpolythoxy-(10)-methacrylat, Tridecylpolyethoxy-(10)-acrylat, Tridecylpolyethoxy-(12)-methacrylat, Tridecylpolyethoxy-(12)-acrylat, Tridecylpolyethoxy-(16)-methacrylat, Tridecylpolyethoxy-(16)-acrylat, Tridecylpolyethoxy-(22)-methacrylat, Tridecylpoly-ethoxy-(22)-acrylat, Tridecylpolyethoxy-(23)-methacrylat, Tridecylpolyethoxy-(23)-acrylat, Tridecylpoly-ethoxy-(25)-methacrylat, Tridecylpolyethoxy-(25)-acrylat, Methoxypolyethoxy-(7)-methacrylat, Methoxy-polyethoxy-(7)-acrylat, Methoxypoly-ethoxy-(12)-methacrylat, Methoxypolyethoxy-(12)-acrylat, Methoxypolyethoxy-(16)-methacrylat, Methoxypolyethoxy-(16)-acrylat, Methoxypolyethoxy-(25)-methacrylat, Methoxy-polyethoxy-(25)-acrylat.

Die Polymere D können jeweils verschiedene Struktureinheiten der Komponente b) enthalten, die sich aus einer oder mehreren der Struktureinheiten der Formeln (2) bis (4) ableiten. Ein Polymer D kann beispielsweise mehrere Struktureinheiten der Formel (2) enthalten, die sich durch unterschiedliche Reste $R^5$ und $R^6$ voneinander unterscheiden. Beispielsweise können in einem Polymer D sowohl N-Vinylformamid als auch N-Methyl-N-vinylacetamid vorkommen. Ein weiteres Polymer D kann beispielsweise auch mehrere Struktureinheiten der Formel (2) und Formel (4) enthalten, die sich durch Ihre chemische Konstruktion unterscheiden. Beispielsweise können in einem Polymer D sowohl N-Vinylformamid als auch Acrylamid vorkommen. Ein weiteres Polymer D kann beispielsweise auch mehrere neutrale Struktureinheiten der Formeln (2) bis (4) enthalten. Beispielsweise können in einem Polymer D sowohl N-Methyl-N-vinylacetamid, Acrylamid als auch N-Vinyl-2-pyrrolidon vorkommen.

Bevorzugte Polymere D enthalten 37,5 bis 75 Mol-%, insbesondere 40 bis 72,5 Mol-% Struktureinheiten der Formel (1), vorzugsweise abgeleitet vom Natrium-Salz des Acryloyldimethyltaurats, Vinylsulphonsäure oder der Vinylphosphonsäure, 25 bis 62,5 Mol-%, insbesondere 27,5 bis 60 Mol-% Struktureinheiten b) vorzugsweise Acrylamid, N-Methyl-N-Vinylacetamid, N-Vinylformamid, oder N-Vinyl-2-pyrrolidon.

Besonders bevorzugte Polymere D enthalten 42,5 bis 70 Mol-% Struktureinheiten der Formel (1), vorzugsweise abgeleitet vom Natrium-Salz des Acryloyldimethyltaurats, Vinylsulphonsäure oder der Vinylphosphonsäure, 30 bis 57,5 Mol-% der Struktureinheiten b), vorzugsweise Acrylamid, N-Methyl-N-Vinylacetamid, N-Vinylformamid oder N-Vinyl-2-pyrrolidon.

Die Verteilung der verschiedenen Struktureinheiten in den Polymeren D kann statistisch, blockartig, alternierend oder gradientenartig sein.

Die Herstellung der Polymere D erfolgt mittels radikalischer Fällungspolymerisation in einem polaren Lösemittel oder Lösemittelgemisch, das 2-Methyl-2-propanol und $C_3$-$C_5$ Keton enthält.

Hierbei werden die entsprechenden Monomere aus denen sich die Struktureinheiten der Komponenten a) und b) ableiten in einem polaren Lösemittel oder Lösemittelgemisch gelöst oder dispergiert und die Polymerisation in an sich bekannter Weise, z. B. durch Zugabe einer radikalbildenden Verbindung, gestartet. Dabei können beispielsweise die vorgelegten Monomere "direkt" polymerisiert werden. Sie können aber auch vor der Polymerisation neutralisiert

werden, indem beispielsweise saure Gruppen eingesetzter Monomere vor der Polymerisation mit Basen ungesetzt werden, wobei die Gegenionen $Q^+$ der Struktureinheiten gemäß Formel (1) ausgebildet werden. Anstelle der Neutralisation der Monomere vor der Polymerisation können jedoch auch die Polymere nach der erfolgten Polymerisation mit den Basen neutralisiert werden. In einer weiteren bevorzugten Ausführungsform des erfindungsgemäßen Verfahrens zur Herstellung der Polymere D, werden die Monomere, aus denen sich die Struktureinheiten der Komponenten a) und b) ableiten, in einem polaren Lösemittel oder Lösemittelgemischen, radikalisch polymerisiert, und gegebenenfalls die Monomere vor der Polymerisation oder das Polymer D nach der Polymerisation mit einer $Li^+$-, $Na^+$-, $K^+$-, $Ca^{++}$-, $Mg^{++}$-, oder $Zn^{++}$- enthaltenden Base, vorzugsweise mit den entsprechenden Hydroxiden, Hydrogencarbonaten und Carbonaten und besonders bevorzugt mit Hydrogencarbonaten und Carbonaten, neutralisiert.

Bevorzuge Basen zur Neutralisation der Struktureinheiten der Komponenten a) sind Natriumhydrogencarbonat, Natriumcarbonat, Natriumhydroxid, Kaliumhydrogencarbonat, Kaliumcarbonat, Kaliumhydroxid, Lithiumhydrogencarbonat, Lithiumcarbonat, Lithiumhydroxid, Calciumhydrogencarbonat, Calciumcarbonat, Calciumhydroxid, vorzugsweise Natriumhydrogencarbonat, Natriumcarbonat, Natriumhydroxid, Kaliumhydrogencarbonat, Kaliumcarbonat, Kaliumhydroxid, besonders bevorzugt sind Natriumhydrogencarbonat, Natriumcarbonat, Natriumhydroxid, und insbesondere bevorzugt sind Natriumhydrogencarbonat und Natriumcarbonat.

In einer weiteren bevorzugten Ausführungsform des erfindungsgemäßen Verfahrens zur Herstellung der Polymere D erfolgt die radikalischer Fällungspolymerisation in einem polaren Lösemittel oder Lösemittelgemisch, das 2-Methyl-2-propanol und $C_3$-$C_5$ Keton enthält und, das dadurch gekennzeichnet ist, dass das Lösemittel oder Lösemittelgemisch einen Siedepunkt von 60 bis 110 °C, vorzugsweise von 60 bis 95 °C, besonders bevorzugt von 65 bis 90 °C aufweist.

In einer weiteren bevorzugten Ausführungsform des erfindungsgemäßen Verfahrens zur Herstellung der Polymere D enthält das polare Lösemittel eine Mischung aus:

c) Wasser
und
d) einem oder mehreren weiteren polare Lösemitteln.

In einer weiteren bevorzugten Ausführungsform des erfindungsgemäßen Verfahrens besteht die Komponente d) aus einem Lösemittelgemisch, welches ein oder mehrere polare organische Lösemittel enthält.

In einer besonders bevorzugten Ausführungsform des erfindungsgemäßen Verfahrens besteht die Komponente d) aus einem Lösemittelgemisch, welches ein oder mehrerer Alkohole und ein oder mehrerer Ketone enthält.

In einer weiteren bevorzugten Ausführungsform des erfindungsgemäßen Verfahrens enthält die Komponente d) ein oder mehrere polare Lösemittel ausgewählt aus der Gruppe aus Methanol, Ethanol, 1-Propanol, 2-Propanol, 2-Methyl-2-Propanol, 1-Butanol, 2-Butanol, Dimethylketon, Diethylketon, Pentan-2-on, Butanon, Tetrahydropyran, Tetrahydrofuran, 2-Methyltetrahydrofuran, 1,3-Dioxan, 1,4-Dioxan vorzugsweise, Ethanol, 1-Propanol, 2-Propanol, 2-Methylpropan-2-ol, 1-Butanol, 2-Butanol, Dimethylketon, Tetrahydrofuran, 2-Methyltetrahydrofuran, 1,3-Dioxan, besonders bevorzugt 2-Propanol, 2-Methylpropan-2-ol, Dimethylketon, Tetrahydrofuran, 2-Methyltetrahydrofuran, 1,3-Dioxan, insbesondere bevorzugt 2-Methylpropan-2-ol und Dimethylketon.

Im erfindungsgemäßen Verfahren können innerhalb der Komponente d) verschiedene polare Losemittel enthalten sein. Ein erfindungsgemäßes polares Lösemittel der Komponente d) kann beispielsweise Dimethylketon enthalten. Ein weiteres erfindungsgemäßes polares Lösemittel der Komponente d) kann beispielsweise eine Mischung aus 2-Methylpropan-2-ol und Dimethylketon enthalten. Ein weiteres erfindungsgemäßes Lösemittel der Komponente d) kann beispielsweise eine Mischung aus Dimethylketon, 2-Methylpropan-2-ol und Tetrahydrofuran enthalten.

Eine besondere Ausführungsform des erfindungsgemäßen Verfahrens ist dadurch gekennzeichnet, dass das polare Lösemittelgemisch 0,5 bis 10 Gew.-%, vorzugsweise 1 bis 8 Gew.-% Wasser und besonders bevorzugt 2 bis 5 Gew.-% Wasser enthält.

Eine weitere besondere Ausführungsform des erfindungsgemäßen Verfahrens ist dadurch gekennzeichnet, dass das polare Lösemittelgemisch 1 bis 99,5 Gew.-% vorzugsweise 5 bis 95 Gew.-% und besonders bevorzugt 10 bis 90 Gew.-% 2-Methylpropan-2-ol enthält.

Eine weitere besondere Ausführungsform des erfindungsgemäßen Verfahrens ist dadurch gekennzeichnet, dass das polare Lösemittelgemisch 0,5 bis 10 Gew.-% Wasser, 1 bis 98,5 Gew.-% 2-Methylpropan-2-ol und 1 bis 98,5 Gew.-% Dimethylketon, vorzugsweise 0,5 bis 7,5 Gew.-% Wasser, 5 bis 94,5 Gew.-% 2-Methylpropan-2-ol und 5 bis 94,5 Gew.-% Dimethylketon, besonders bevorzugt 1 bis 5 Gew.-% Wasser, 7,5 bis 91,5 Gew.-% 2-Methylpropan-2-ol und 7,5 bis 91,5 Gew.-% Dimethylketon enthält.

Eine besonders bevorzugte Ausführungsform des erfindungsgemäßen Verfahrens erfolgt vorzugsweise in einem Gemisch aus 2-Methylpropan-2-ol, Dimethylketon und Wasser. Der Wassergehalt dieses Gemisches darf 10 Gew.-% nicht überschreiten, da sonst im Verlauf der Polymerisation Klumpenbildung auftreten kann. Konkret hat die Wahl der Art und der Menge des Lösemittelgemisches so zu erfolgen, dass das Salz der wiederkehrenden Struktureinheit

der Formel (1), insbesondere des Acryloyldimethyltaurats darin weitgehend löslich oder dispergierbar ist. Unter weitgehend löslich oder dispergierbar ist zu verstehen, dass sich auch nach Abstellen des Rührwerks kein festes Material aus der Lösung oder Dispersion absetzt. Das im Verlauf der Reaktion entstehende Polymer D soll hingegen in dem gewählten Lösemittelgemisch weitgehend unlöslich sein. Unter weitgehend unlöslich ist hierbei zu verstehen, dass im Verlauf der Polymerisation eine gut rührbare, breiige Polymerpaste entsteht, in der sich keine Klumpen oder Verklebungen bilden dürfen. Das durch Absaugen der Paste erhältliche Filtrat darf einen Feststoffgehalt von maximal 5 Gew.-% aufweisen. Sind die Copolymere in stärkerem Ausmaß im gewählten Lösemittel oder Lösemittelgemisch löslich, kann es beim Trocknen der Polymerisatpaste zu Verklumpungen kommen.

Die Polymerisationsreaktion selbst wird in an sich bekannter Weise durch radikalbildende Verbindungen wie Azoinitiatoren (z. B. Azo-bis-isobutyronitril, 2,2'-Azobis(4-methoxy-2.4-dimethyl valeronitril), 2,2'-Azobis(2.4-dimethyl valeronitril), Dimethyl 2,2'-azobis(2-methylpropionat), 2,2'-Azobis(2-methylbutyronitril), 1,1'-Azobis(cyclohexane-1-carbonitril) oder 2,2'-Azobis[N-(2-propenyl)-2-methyl-propionamid]), Peroxiden (z. B. Dilaurylperoxid, tert.-Butylhydroperoxid, Di-tert.-Butylperoxid, Triphenylmethylhydroperoxid, Benzoylperoxid), oder Persulfaten in einem geeigneten Temperaturintervall von 20 bis 120 °C, vorzugsweise zwischen 30 und 80 °C und insbesondere bevorzugt zwischen 40 und 70 °C, ausgelöst und über einen Zeitraum von 30 min. bis mehreren Stunden fortgeführt.

Die Polymere D fallen als weißer, voluminöser Niederschlag im polaren Lösemittelgemisch an. Zur Isolierung können alle üblichen Verdampfungs-, Trocknungs-Isolierprozesse verwendet werden. Insbesondere kann das polare Lösemittelgemisch durch eine Druckfiltration oder Destillation vom Produkt abgetrennt werden. Ein geringer Rückstand des polaren Lösemittelgemisches ist weder aus sicherheitstechnischen noch aus anwendungstechnischen Gründen bedenklich.

Die nach dem erfindungsgemäßen Verfahren hergestellten Polymere D eignen sich vorteilhafter Weise zur Verwendung als Wasserverlustreduzierer in Bohrspülungsflüssigkeiten und Zementschlämmen. Diese werden bei der Tiefbohrungen zur Reduzierung des Wasserverlustes an der Bohrlochswandung und als Mittel zur Reduzierung des Wasserverluts in Zementschlämmen verwendet. Solche Additive werden auch Fluid Loss- oder Fluid Loss Control-Additive genant.

Weiterer Gegenstand der vorliegenden Erfindung ist die Verwendung der Polymere D in wasserbasierten Bohrflüssigkeiten. Diese Bohrflüssigkeiten können neben den Polymeren C weitere Additive enthalten. Solche Additive sind beispielsweise Bentonite, Tonstabilisatoren, Lignin/Ligninsulfonate, pH-Stabilisatoren (z. B. Hydroxide), Temperaturstabilisatoren (z. B. Monoethanolamin oder sulfonierte synthetische Polymere) und Beschwerungsmittel (z. B. Barit, Magnetit, Calciumcarbonat, Ilmenit) zur Einstellung der gewünschten Dichte.

Ein weiterer Gegenstand der vorliegenden Erfindung ist ein Verfahren zur Zementierung von Tiefbohrungen, bei dem eine Zementschlämme in die Tiefborhung verbracht wird, welcher die Polymere D in einer Konzentration von 0,01 - 5 % bwoc (by weight of cement) vorzugsweise 0,05 bis 2,5 % bwoc enthält. Weitere Komponenten der Zementschlämme sind Wasser in unterschiedlicher Salinität und Zement. Außerdem können Dispergatoren, Verzögerer, Beschleuniger, Extender, Entschäumer oder Silikatderivate als Hilfsmittel verwendet werden.

Beispiele:

A) Verfahren:

In den Beispielen wurde das verwendete polare Lösemittel variiert, mit dessen Hilfe die Polymere D hergestellt werden können. Mit Hilfe der Verfahrensbeispiele 1 bis 20 wurden weitere erfindungsgemäße Polymere D durch die Variation der Monomere und Variation der Komponente e) hergestellt. Diese Polymere D und das für die Synthese verwendete Verfahrensbeispielen werden in der Tabelle 1a) bis 1c) zusammengefasst.

Verfahrensbeispiel 1:

In einem 2L Liter Quickfitkolben mit Ankerrührer, Rückflusskühler mit Abgaswäscher, kombiniertes Thermometer/pH-Meter und einem Gaseinleitungsrohr werden 234 g wasserfreies 2-Methylpropan-2-ol und 158 g Dimethylketon mit 8 g destilliertem Wasser versetzt.

Das Reaktionsgefäß befindet sich in einem Heizbadthermostaten. Dieses Reaktionsgefäß wird mit Stickstoffgas überschichtet und im leichten Stickstoffgegenstrom 80g Acryloyldimethyltaurat, und 32,4 g Natriumhydrogencarbonat eingetragen. Das Acryloyldimethyltaurat Natrium Salz löst sich im 2-Methylpropan-2-ol /Dimethylketon / Wasser Gemisch nicht vollständig auf und liegt teilweise als Feststoffdispersion vor. Das Reaktionsgefäß wird mit Stickstoff überschichtet und es werden 15 g Acrylamid und 2,5 g N-Vinylpyrrolidon eingetragen. Nach Eintrag des Acrylamids und N-Vinylpyrrolidons wird der pH-Wert nochmals kontrolliert und gegebenfalls durch Zusatz von Natriumhydrogencarbonat in den Bereich pH 7 bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene

Wert an Restsauerstoff in der flüssigen Phase den Wert 1 ppm übersteigen, muss erneut inertisiert werden, bis dieser Wert erreicht wird. Danach wird der Reaktionskessel auf 60 °C erwärmt und im leichten Stickstoffstrom 1,0 g Azobis(isobutyronitril) zugegeben. Die Initiierung der Polymerisation wird durch einen Anstieg der Innentemperatur erkennbar. Nach der Initiierung wird das Einleiten von Stickstoffgas beendet. Ungefähr 5 - 10 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol:Diemethylketon Wasser Gemisches erhöht. Unter leichten Rückfluss wird die nun viskose Masse zwei Stunden nachgerührt. Das Reaktionsprodukt, welches als viskose Suspension von Polymer im 2-Methylpropan-2-ol:Diemethylketon Wasser Gemisch vorliegt, wird durch abfiltrieren und anschließender Trocknung im Vakuumtrockenschrank isoliert.

Verfahrensbeispiel 2:

In einem 2L Liter Quickfitkolben mit Ankerrührer, Rückflusskühler mit Abgaswäscher, kombiniertes Thermometer/pH-Meter und einem Gaseinleitungsrohr werden 234 g wasserfreies 2-Methylpropan-2-ol und 154 g Dimethylketon mit 12 g destilliertem Wasser versetzt. Das Reaktionsgefäß befindet sich in einem Heizbadthermostaten. Die weiteren Schritte des Polymerisationsverfahrens 2 werden analog zu Polymerisationsverfahren 1 durchgeführt. Die Änderungen der Monomerzusammensetzungen sind in Tabelle 1 genau aufgeführt.

Verfahrensbeispiel 3:

In einem 2L Liter Quickfitkolben mit Ankerrührer, Rückflusskühler mit Abgaswäscher, kombiniertes Thermometer/pH-Meter und einem Gaseinleitungsrohr werden 234 g wasserfreies 2-Methylpropan-2-ol und 154 g Dimethylketon mit 16 g destilliertem Wasser versetzt. Das Reaktionsgefäß befindet sich in einem Heizbadthermostaten. Die weiteren Schritte des Polymerisationsverfahrens 3 werden analog zu Polymerisationsverfahren 1 durchgeführt. Die Änderungen der Monomerzusammensetzungen sind in Tabelle 1 genau aufgeführt.

Verfahrensbeispiel 4:

In einem 2L Liter Quickfitkolben mit Ankerrührer, Rückflusskühler mit Abgaswäscher, kombiniertes Thermometer/pH-Meter und einem Gaseinleitungsrohr werden 296 g wasserfreies 2-Methylpropan-2-ol und 94 g Dimethylketon mit 10 g destilliertem Wasser versetzt. Das Reaktionsgefäß befindet sich in einem Heizbadthermostaten. Die weiteren Schritte des Polymerisationsverfahrens 4 werden analog zu Polymerisationsverfahren 1 durchgeführt. Die Änderungen der Monomerzusammensetzungen sind in Tabelle 1 genau aufgeführt.

Verfahrensbeispiel 5:

In einem 2L Liter Quickfitkolben mit Ankerrührer, Rückflusskühler mit Abgaswäscher, kombiniertes Thermometer/pH-Meter und einem Gaseinleitungsrohr werden 296 g wasserfreies 2-Methylpropan-2-ol und 86 g Dimethylketon mit 14 g destilliertem Wasser versetzt. Das Reaktionsgefäß befindet sich in einem Heizbadthermostaten. Die weiteren Schritte des Polymerisationsverfahrens 5 werden analog zu Polymerisationsverfahren 1 durchgeführt. Die Änderungen der Monomerzusammensetzungen sind in Tabelle 1 genau aufgeführt.

Verfahrensbeispiel 6:

In einem 2L Liter Quickfitkolben mit Ankerrührer, Rückflusskühler mit Abgaswäscher, kombiniertes Thermometer/pH-Meter und einem Gaseinleitungsrohr werden 296 g wasserfreies 2-Methylpropan-2-ol und 90 g Dimethylketon mit 18 g destilliertem Wasser versetzt. Das Reaktionsgefäß befindet sich in einem Heizbadthermostaten. Die weiteren Schritte des Polymerisationsverfahrens 6 werden analog zu Polymerisationsverfahren 1 durchgeführt. Die Änderungen der Monomerzusammensetzungen sind in Tabelle 1 genau aufgeführt.

Verfahrensbeispiel 7:

In einem 2L Liter Quickfitkolben mit Ankerrührer, Rückflusskühler mit Abgaswäscher, kombiniertes Thermometer/pH-Meter und einem Gaseinleitungsrohr werden 197 g wasserfreies 2-Methylpropan-2-ol und 197 g Dimethylketon mit 6 g destilliertem Wasser versetzt. Das Reaktionsgefäß befindet sich in einem Heizbadthermostaten. Die weiteren Schritte des Polymerisationsverfahrens 7 werden analog zu Polymerisationsverfahren 1 durchgeführt. Die Änderungen der Monomerzusammensetzungen sind in Tabelle 1 genau aufgeführt.

Verfahrensbeispiel 8:

In einem 2L Liter Quickfitkolben mit Ankerrührer, Rückflusskühler mit Abgaswäscher, kombiniertes Thermometer/pH-Meter und einem Gaseinleitungsrohr werden 195 g wasserfreies 2-Methylpropan-2-ol und 197 g Dimethylketon mit 10 g destilliertem Wasser versetzt. Das Reaktionsgefäß befindet sich in einem Heizbadthermostaten. Die weiteren Schritte des Polymerisationsverfahrens 8 werden analog zu Polymerisationsverfahren 1 durchgeführt. Die Änderungen der Monomerzusammensetzungen sind in Tabelle 1 genau aufgeführt.

Verfahrensbeispiel 9:

In einem 2L Liter Quickfitkolben mit Ankerrührer, Rückflusskühler mit Abgaswäscher, kombiniertes Thermometer/pH-Meter und einem Gaseinleitungsrohr werden 193 g wasserfreies 2-Methylpropan-2-ol und 193 g Dimethylketon mit 14 g destilliertem Wasser versetzt. Das Reaktionsgefäß befindet sich in einem Heizbadthermostaten. Die weiteren Schritte des Polymerisationsverfahrens 9 werden analog zu Polymerisationsverfahren 1 durchgeführt. Die Änderungen der Monomerzusammensetzungen sind in Tabelle 1 genau aufgeführt.

Verfahrensbeispiel 10:

In einem 2L Liter Quickfitkolben mit Ankerrührer, Rückflusskühler mit Abgaswäscher, kombiniertes Thermometer/pH-Meter und einem Gaseinleitungsrohr werden 191 g wasserfreies 2-Methylpropan-2-ol und 191 g Dimethylketon mit 18 g destilliertem Wasser versetzt. Das Reaktionsgefäß befindet sich in einem Heizbadthermostaten. Die weiteren Schritte des Polymerisationsverfahrens 10 werden analog zu Polymerisationsverfahren 1 durchgeführt. Die Änderungen der Monomerzusammensetzungen sind in Tabelle 1 genau aufgeführt.

Verfahrensbeispiel 11:

In einem 2L Liter Quickfitkolben mit Ankerrührer, Rückflusskühler mit Abgaswäscher, kombiniertes Thermometer/pH-Meter und einem Gaseinleitungsrohr werden 90 g wasserfreies 2-Methylpropan-2-ol und 298 g Dimethylketon mit 12 g destilliertem Wasser versetzt. Das Reaktionsgefäß befindet sich in einem Heizbadthermostaten. Die weiteren Schritte des Polymerisationsverfahrens 11 werden analog zu Polymerisationsverfahren 1 durchgeführt. Die Änderungen der Monomerzusammensetzungen sind in Tabelle 1 genau aufgeführt.

Verfahrensbeispiel 12:

In einem 2L Liter Quickfitkolben mit Ankerrührer, Rückflusskühler mit Abgaswäscher, kombiniertes Thermometer/pH-Meter und einem Gaseinleitungsrohr werden 90 g wasserfreies 2-Methylpropan-2-ol und 294 g Dimethylketon mit 16 g destilliertem Wasser versetzt. Das Reaktionsgefäß befindet sich in einem Heizbadthermostaten. Die weiteren Schritte des Polymerisationsverfahrens 12 werden analog zu Polymerisationsverfahren 1 durchgeführt. Die Änderungen der Monomerzusammensetzungen sind in Tabelle 1 genau aufgeführt.

Verfahrensbeispiel 13:

In einem 2L Liter Quickfitkolben mit Ankerrührer, Rückflusskühler mit Abgaswäscher, kombiniertes Thermometer/pH-Meter und einem Gaseinleitungsrohr werden 90 g wasserfreies 2-Methylpropan-2-ol und 290g Dimethylketon mit 20 g destilliertem Wasser versetzt. Das Reaktionsgefäß befindet sich in einem Heizbadthermostaten. Die weiteren Schritte des Polymerisationsverfahrens 13 werden analog zu Polymerisationsverfahren 1 durchgeführt. Die Änderungen der Monomerzusammensetzungen sind in Tabelle 1 genau aufgeführt.

Verfahrensbeispiel 14:

In einem 2L Liter Quickfitkolben mit Ankerrührer, Rückflusskühler mit Abgaswäscher, kombiniertes Thermometer/pH-Meter und einem Gaseinleitungsrohr werden 60 g wasserfreies 2-Methylpropan-2-ol und 320 g Dimethylketon mit 20 g destilliertem Wasser versetzt. Das Reaktionsgefäß befindet sich in einem Heizbadthermostaten. Die weiteren Schritte des Polymerisationsverfahrens 14 werden analog zu Polymerisationsverfahren 1 durchgeführt. Die Änderungen der Monomerzusammensetzungen sind in Tabelle 1 genau aufgeführt.

Verfahrensbeispiel 15:

In einem 2L Liter Quickfitkolben mit Ankerrührer, Rückflusskühler mit Abgaswäscher, kombiniertes Thermometer/pH-Meter und einem Gaseinleitungsrohr werden 60 g wasserfreies 2-Methylpropan-2-ol und 316 g Dimethylketon mit 24 g destilliertem Wasser versetzt. Das Reaktionsgefäß befindet sich in einem Heizbadthermostaten. Die weiteren Schritte des Polymerisationsverfahrens 15 werden analog zu Polymerisationsverfahren 1 durchgeführt. Die Änderungen der Monomerzusammensetzungen sind in Tabelle 1 genau aufgeführt.

Verfahrensbeispiel 16: (nicht erfindungsgemäß)

In einem 2L Liter Quickfitkolben mit Ankerrührer, Rückflusskühler mit Abgaswäscher, kombiniertes Thermometer/pH-Meter und einem Gaseinleitungsrohr werden 384 g Tetrahydrofuran und 16 g destilliertem Wasser vorgelegt. Das Reaktionsgefäß befindet sich in einem Heizbadthermostaten. Dieses Reaktionsgefäß wird mit Stickstoffgas überschichtet und im leichten Stickstoffgegenstrom 85 g Acryloyldimethyltaurat, 1,15 g Vinylphosphonsäure und 42,1 g Kaliumydrogencarbonat eingetragen. Das Acryloyldimethyltaurat Kalium Salz löst sich im Tetrahydrofuran / Wasser Gemisch nicht vollständig auf und liegt teilweise als Feststoffdispersion vor. Das Reaktionsgefäß wird mit Stickstoff überschichtet und es werden 5 g Acrylamid, 5 g N-Vinylpyrrolidon und 5 g N-Vinylformamid eingetragen. Nach Eintrag der neutralen Monomere wird der pH-Wert nochmals kontrolliert und gegebenfalls durch Zusatz von Kaliumhydrogencarbonat in den Bereich pH 7 bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1 ppm übersteigen, muss erneut inertisiert werden, bis dieser Wert erreicht wird. Danach wird der Reaktionskessel auf 60 °C erwärmt und im leichten Stickstoffstrom 1,0 g Azobis(isobutyronitril) zugegeben. Die Initiierung der Polymerisation wird durch einen Anstieg der Innentemperatur erkennbar. Nach der Initiierung wird das Einleiten von Stickstoffgas beendet. Ungefähr 5 - 10 Minuten nach Einsetzen der Polymerisationsreaktion ist das Temperaturmaximum überschritten und die Temperatur im Reaktionsgefäß wird durch das Heizbad bis zum Siedepunkt des Tetrahydrofuran/Wasser Gemisches erhöht. Unter leichten Rückfluss wird die nun viskose Masse zwei Stunden nachgerührt. Das Reaktionsprodukt, welches als viskose Suspension von Polymer im Tetrahydrofuran /Wasser Gemisch vorliegt, wird durch abfiltrieren und anschließender Trocknung im Vakuumtrockenschrank isoliert.

Verfahrensbeispiel 17: (nicht erfindungsgemäß)

In einem 2L Liter Quickfitkolben mit Ankerrührer, Rückflusskühler mit Abgaswäscher, kombiniertes Thermometer/pH-Meter und einem Gaseinleitungsrohr werden 394 g Tetrahydrofuran und 6 g destilliertem Wasser vorgelegt. Das Reaktionsgefäß befindet sich in einem Heizbadthermostaten. Die weiteren Schritte des Polymerisationsverfahrens 17 werden analog zu Polymerisationsverfahren 16 durchgeführt. Die Änderungen der Monomerzusammensetzungen sind in Tabelle 1 genau aufgeführt.

Verfahrensbeispiel (nicht erfindungsgemäß)

In einem 2L Liter Quickfitkolben mit Ankerrührer, Rückflusskühler mit Abgaswäscher, kombiniertes Thermometer/pH-Meter und einem Gaseinleitungsrohr werden 390 g wasserfreies 2-Methyltetrahydrofuran mit 10 g destilliertem Wasser versetzt. Das Reaktionsgefäß befindet sich in einem Heizbadthermostaten. Die weiteren Schritte des Polymerisationsverfahrens 18 werden analog zu Polymerisationsverfahren 1 durchgeführt. Die Änderungen der Monomerzusammensetzungen sind in Tabelle 1 genau aufgeführt.

Die Polymere D die nach den erfindungsgemäßen Verfahrensbeispielen 1 bis 15 hergestellt wurden, sind in der nachfolgenden Tabelle 1 aufgeführt. Durchgeführte Änderungen wie beispielsweise der Einsatz und die Einsatzmenge einer anderen Base zur Neutralisation des Acryloyldimethyltaurat oder der Einsatz und die Einsatzmenge eines anderen Initiators sind in der Tabelle 1 dargelegt.

Tabelle 1: Beispiele für Polymere D hergestellt nach den erfindungsgemäßen Polymerisationsverfahren 1 bis 20

| Bezeichnung | Verf. Bsp. | ACDMT / Mol-% | Co-Monomer-1 Name | Co-Monomer-1 / Mol-% | Co-Monomer-2 Name | Co-Monomer-2 / Mol-% | Co-Monomer-3 Name | Co-Monomer-3 / Mol-% | Co-Monomer-4 Name | Co-Monomer-4 / Mol-% | Neutralisierungs-Mittel Name | Neutralisierungs-Mittel /g | Initiator Name | Initiator /g | k-Wert |
|---|---|---|---|---|---|---|---|---|---|---|---|---|---|---|---|
| Polymer D - 1 | 1 | 62,3 | AM | 34,1 | NVP | 3,63 | - | - | - | - | $NaHCO_3$ | 32,4 | AIBN | 1,00 | 204 |
| Polymer D - 2 | 2 | 62,3 | AM | 34,1 | NVP | 3,63 | - | - | - | - | $NaHCO_3$ | 32,4 | AIBN | 1,00 | 212 |
| Polymer D - 3 | 3 | 62,3 | AM | 34,1 | NVP | 3,63 | - | - | - | - | $NaHCO_3$ | 32,4 | AIBN | 1,00 | 207 |
| Polymer D - 4 | 5 | 62,3 | AM | 34,1 | NVP | 3,63 | - | - | - | - | $NaHCO_3$ | 32,4 | AIBN | 1,00 | 193 |
| Polymer D - 5 | 8 | 62,3 | AM | 34,1 | NVP | 3,63 | - | - | - | - | $NaHCO_3$ | 32,4 | AIBN | 1,00 | 187 |
| Polymer D - 6 | 9 | 62,3 | AM | 34,1 | NVP | 3,63 | - | - | - | - | $NaHCO_3$ | 32,4 | AIBN | 1,00 | 206 |
| Polymer D - 7 | 11 | 62,3 | AM | 34,1 | NVP | 3,63 | - | - | - | - | $NaHCO_3$ | 32,4 | AIBN | 1,00 | 209 |
| Polymer D - 8 | 12 | 62,3 | AM | 34,1 | NVP | 3,63 | - | - | - | - | $NaHCO_3$ | 32,4 | AIBN | 1,00 | 171 |
| Polymer D - 9 | 14 | 62,3 | AM | 34,1 | NVP | 3,63 | - | - | - | - | $NaHCO_3$ | 32,4 | AIBN | 1,00 | 238 |
| Polymer D - 11 | 2 | 62,3 | AM | 34,1 | NVP | 3,63 | - | - | - | - | Na2CO3 | 20,5 | AIBN | 1,00 | 213 |
| Polymer D - 12 | 9 | 62,3 | AM | 34,1 | NVP | 3,63 | - | - | - | - | K2CO3 | 26,7 | AIBN | 1,00 | 224 |
| Polymer D - 13 | 12 | 62,3 | AM | 34,1 | NVP | 3,63 | - | - | - | - | KHCO3 | 38,7 | AIBN | 1,00 | 215 |
| Polymer D - 14 | 5 | 62,3 | AM | 34,1 | NVP | 3,63 | - | - | - | - | KOH | 21,7 | AIBN | 1,00 | 213 |
| Polymer D - 15 | 14 | 62,3 | AM | 34,1 | NVP | 3,63 | - | - | - | - | NaOH | 15,4 | AIBN | 1,00 | 241 |
| Polymer D - 16 | 2 | 60,8 | AM | 33,2 | NVP | 3,54 | - | - | - | - | $NaHCO_3$ | 33,8 | AIBN | 1,10 | 217 |
| Polymer D - 17 | 5 | 60,8 | AM | 33,2 | NVP | 3,54 | - | - | - | - | $KHCO_3$ | 40,2 | AIBN | 1,10 | 226 |
| Polymer D - 18 | 8 | 78,7 | DMAAm | 14,4 | NVP | 5,04 | - | - | - | - | $NaHCO_3$ | 33,2 | AIBN | 0,80 | 196 |
| Polymer D-19 | 2 | 78,7 | DMAAm | 14,4 | NVP | 5,04 | - | - | - | - | KHCO3 | 39,6 | AIBN | 0,80 | 206 |
| Polymer D - 20 | 5 | 38,7 | AM | 18,3 | VIMA | 12,04 | - | - | - | - | LiHCO3 | 47,2 | AIBN | 1,70 | 228 |
| Polymer D - 21 | 8 | 41,6 | AM | 22,8 | NVP | 2,43 | - | - | - | - | $NaHCO_3$ | 58,3 | AIBN | 1,60 | 199 |
| Polymer D - 22 | 3 | 52,8 | AM | 28,8 | VIMA | 4,14 | NVF | 9,61 | - | - | $Na_2CO_3$ | 24,0 | AIBN | 1,10 | 224 |
| Polymer D - 23 | 8 | 37,0 | AM | 24,9 | NVP | 1,90 | NVF | 6,73 | - | - | $Na_2CO_3$ | 53,1 | AIBN | 1,60 | 203 |
| Polymer D - 24 | 10 | 54,3 | AM | 29,7 | VIMA | 14,48 | - | - | - | - | $NaHCO_3$ | 33,3 | AIBN | 1,20 | 231 |
| Polymer D - 25 | 9 | 56,5 | AM | 30,9 | NVF | 10,09 | - | - | - | - | $KHCO_3$ | 40,4 | AIBN | 1,10 | 216 |

(fortgesetzt)

| Bezeichnung | Verf. Bsp. | ACDMT / Mol-% | Co-Monomer-1 Name | Co-Monomer-1 / Mol-% | Co-Monomer-2 Name | Co-Monomer-2 / Mol-% | Co-Monomer-3 Name | Co-Monomer-3 / Mol-% | Co-Monomer-4 Name | Co-Monomer-4 / Mol-% | Neutralisierungs-Mittel Name | Neutralisierungs-Mittel /g | Initiator Name | Initiator /g | k-Wert |
|---|---|---|---|---|---|---|---|---|---|---|---|---|---|---|---|
| Polymer D - 26 | 4 | 30,8 | AM | 40,5 | NVP | 2,59 | NVF | 4,05 | - | - | $NaHCO_3$ | 30,8 | AIBN | 1,10 | 206 |
| Polymer D - 27 | 6 | 30,8 | AM | 40,5 | NVP | 2,59 | NVF | 4,05 | - | - | $NaHCO_3$ | 30,8 | AIBN | 1,10 | 232 |
| Polymer D - 28 | 7 | 30,8 | AM | 40,5 | NVP | 2,59 | NVF | 4,05 | - | - | $NaHCO_3$ | 30,8 | AIBN | 1,10 | 179 |
| Polymer D - 29 | 10 | 30,8 | AM | 40,5 | NVP | 2,59 | NVF | 4,05 | - | - | $NaHCO_3$ | 30,8 | AIBN | 1,10 | 238 |
| Polymer D - 30 | 13 | 30,8 | AM | 40,5 | NVP | 2,59 | NVF | 4,05 | - | - | $NaHCO_3$ | 30,8 | AIBN | 1,10 | 242 |
| Polymer D - 31 | 4 | 68,8 | AM | 11,8 | NVP | 7,55 | NVF | 11,81 | - | - | $NaHCO_3$ | 34,5 | AIBN | 1,40 | 186 |
| Polymer D - 32 | 6 | 68,8 | AM | 11,8 | NVP | 7,55 | NVF | 11,81 | - | - | $NaHCO_3$ | 34,5 | AIBN | 1,40 | 215 |
| Polymer D - 33 | 7 | 68,8 | AM | 11,8 | NVP | 7,55 | NVF | 11,81 | - | - | $NaHCO_3$ | 34,5 | AIBN | 1,00 | 176 |
| Polymer D - 34 | 10 | 68,8 | AM | 11,8 | NVP | 7,55 | NVF | 11,81 | - | - | $NaHCO_3$ | 34,5 | AIBN | 1,40 | 180 |
| Polymer D - 35 | 13 | 68,8 | AM | 11,8 | NVP | 7,55 | NVF | 11,81 | - | - | $NaHCO_3$ | 34,5 | AIBN | 1,00 | 237 |
| Polymer D - 36 | 15 | 68,8 | AM | 11,8 | NVP | 7,55 | NVF | 11,81 | - | - | $NaHCO_3$ | 34,5 | AIBN | 1,00 | 243 |
| Polymer D - 37 | 2 | 68,8 | AM | 11,8 | NVP | 7,55 | NVF | 11,81 | - | - | $NaHCO_3$ | 34,5 | AIBN | 1,00 | 213 |
| Polymer D - 38 | 9 | 68,8 | AM | 11,8 | NVP | 7,55 | NVF | 11,81 | - | - | $NaHCO_3$ | 34,5 | AIBN | 1,00 | 207 |
| Polymer D - 39 | 11 | 68,8 | AM | 11,8 | NVP | 7,55 | NVF | 11,81 | - | - | $NaHCO_3$ | 34,5 | AIBN | 1,00 | 211 |
| Polymer D - 41 | 2 | 67,4 | VPS | 1,99 | AM | 11,60 | NVP | 7,42 | NVF | 11,60 | $LiHCO_3$ | 28,6 | AIBN | 1,00 | 216 |
| Polymer D - 42 | 16 | 67,4 | VPS | 1,99 | AM | 11,60 | NVP | 7,42 | NVF | 11,60 | $KHCO_3$ | 42,1 | AIBN | 1,00 | 147 |
| Polymer D - 43 | 17 | 67,4 | VPS | 1,99 | AM | 11,60 | NVP | 7,42 | NVF | 11,60 | $Na_2CO_3$ | 22,9 | AIBN | 1,00 | 128 |
| Polymer D - 44 | 18 | 67,4 | VPS | 1,99 | AM | 11,60 | NVP | 7,42 | NVF | 11,60 | $K_2CO_3$ | 29,1 | AIBN | 1,00 | 135 |
| Polymer D - 45 | 9 | 67,4 | VPS | 1,99 | AM | 11,60 | NVP | 7,42 | NVF | 11,60 | $NaHCO_3$ | 35,3 | AIBN | 1,00 | 186 |
| Polymer D - 46 | 2 | 44,5 | AM | 55,5 | - | - | - | - | - | - | $NaHCO_3$ | 28,4 | AIBN | 1,30 | 220 |
| Polymer D - 47 | 4 | 44,5 | AM | 55,5 | - | - | - | - | - | - | $NaHCO_3$ | 28,4 | AIBN | 1,30 | 222 |
| Polymer D - 48 | 9 | 44,5 | AM | 55,5 | - | - | - | - | - | - | $NaHCO_3$ | 28,4 | AIBN | 1,40 | 204 |
| Polymer D - 49 | 11 | 44,5 | AM | 55,5 | - | - | - | - | - | - | $NaHCO_3$ | 28,4 | AIBN | 1,60 | 200 |
| Polymer D - 51 | 5 | 44,0 | AM | 55,0 | VPS | 1,00 | - | - | - | - | $NaHCO_3$ | 29,0 | AIBN | 1,30 | 192 |

(fortgesetzt)

| Bezeichnung | Verf. Bsp. | ACDMT / Mol-% | Co-Monomer-1 Name | Co-Monomer-1 / Mol-% | Co-Monomer-2 Name | Co-Monomer-2 / Mol-% | Co-Monomer-3 Name | Co-Monomer-3 / Mol-% | Co-Monomer-4 Name | Co-Monomer-4 / Mol-% | Neutralisierungs-Mittel Name | Neutralisierungs-Mittel /g | Initiator Name | Initiator /g | k-Wert |
|---|---|---|---|---|---|---|---|---|---|---|---|---|---|---|---|
| Polymer D - 52 | 5 | 43,6 | AM | 54,4 | VPS | 2,00 | - | - | - | - | $NaHCO_3$ | 29,7 | AIBN | 1,30 | 183 |
| Polymer D - 53 | 5 | 43,1 | AM | 53,9 | VPS | 2,99 | - | - | - | - | $NaHCO_3$ | 30,3 | AIBN | 1,30 | 187 |
| Polymer D - 54 | 5 | 42,7 | AM | 53,3 | VPS | 4,03 | - | - | - | - | $NaHCO_3$ | 31,1 | AIBN | 1,30 | 201 |
| Polymer D - 55 | 5 | 42,2 | AM | 52,8 | VPS | 4,98 | - | - | - | - | $NaHCO_3$ | 31,7 | AIBN | 1,30 | 205 |
| Polymer D - 56 | 2 | 44,0 | VPS | 1,00 | AM | 55,0 | - | - | - | - | KOH | 19,8 | AIBN | 1,30 | 217 |
| Polymer D - 57 | 2 | 43,6 | VPS | 2,00 | AM | 54,4 | - | - | - | - | NaOH | 14,8 | AIBN | 1,30 | 215 |
| Polymer D - 58 | 2 | 42,0 | VPS | 1,00 | AM | 52,5 | NVP | 4,50 | - | - | KOH | 19,9 | AIBN | 1,30 | 219 |
| Polymer D - 59 | 2 | 42,0 | VPS | 1,00 | AM | 52,5 | NVP | 4,50 | - | - | NaOH | 14,2 | AIBN | 1,30 | 208 |
| Polymer D - 60 | 2 | 42,5 | VPS | 1,01 | AM | 53,1 | NVF | 3,48 | - | - | KOH | 19,9 | AIBN | 1,30 | 211 |
| Polymer D - 61 | 2 | 42,5 | VPS | 1,01 | AM | 53,1 | NVF | 3,48 | - | - | NaOH | 14,2 | AIBN | 1,30 | 214 |
| Polymer D - 62 | 2 | 42,9 | VPS | 1,02 | AM | 53,6 | VIMA | 2,50 | - | - | KOH | 19,9 | AIBN | 1,30 | 216 |
| Polymer D - 63 | 2 | 42,9 | VPS | 1,02 | AM | 53,6 | VIMA | 2,50 | - | - | NaOH | 14,2 | AIBN | 1,30 | 213 |
| Polymer D - 64 | 2 | 46,0 | VPS | 1,01 | AM | 47,9 | DMAAm | 5,08 | - | - | KOH | 19,8 | AIBN | 1,30 | 218 |
| Polymer D - 65 | 2 | 46,0 | VPS | 1,01 | AM | 47,9 | DMAAm | 5,08 | - | - | NaOH | 14,1 . | AIBN | 1,30 | 222 |
| Polymer D - 66 | 4 | 30,0 | AM | 70,0 | - | - | - | - | - | - | $NaHCO_3$ | 22,3 | AIBN | 1,40 | 206 |
| Polymer D - 67 | 4 | 35,0 | AM | 65,0 | - | - | - | - | - | - | $NaHCO_3$ | 25,4 | AIBN | 1,40 | 211 |
| Polymer D - 68 | 4 | 40,0 | AM | 60,0 | - | - | - | - | - | - | $NaHCO_3$ | 28,4 | AIBN | 1,40 | 207 |
| Polymer D - 69 | 4 | 45,0 | AM | 55,0 | - | - | - | - | - | - | $NaHCO_3$ | 30,4 | AIBN | 1,40 | 215 |
| Polymer D - 70 | 13 | 30,0 | AM | 70,0 | - | - | - | - | - | - | $NaHCO_3$ | 22,3 | AIBN | 1,40 | 228 |
| Polymer D - 71 | 13 | 35,0 | AM | 65,0 | - | - | - | - | - | - | $NaHCO_3$ | 25,4 | AIBN | 1,40 | 222 |
| Polymer D - 72 | 13 | 40,0 | AM | 60,0 | - | - | - | - | - | - | $NaHCO_3$ | 28,4 | AIBN | 1,40 | 236 |
| Polymer D - 73 | 13 | 45,0 | AM | 55,0 | - | - | - | - | - | - | $NaHCO_3$ | 30,4 | AIBN | 1,40 | 231 |
| Polymer D - 74 | 4 | 28,5 | AM | 66,5 | VIMA | 5,00 | - | - | - | - | $Na_2CO_3$ | 19,0 | AIBN | 1,40 | 217 |
| Polymer D - 75 | 4 | 33,2 | AM | 61,8 | VIMA | 5,00 | - | - | - | - | $Na_2CO_3$ | 20,9 | AIBN | 1,40 | 209 |

(fortgesetzt)

| Bezeichnung | Verf. Bsp. | ACDMT / Mol-% | Co-Monomer-1 Name | Co-Monomer-1 / Mol-% | Co-Monomer-2 Name | Co-Monomer-2 / Mol-% | Co-Monomer-3 Name | Co-Monomer-3 / Mol-% | Co-Monomer-4 Name | Co-Monomer-4 / Mol-% | Neutralisierungs-Mittel Name | Neutralisierungs-Mittel /g | Initiator Name | Initiator /g | k-Wert |
|---|---|---|---|---|---|---|---|---|---|---|---|---|---|---|---|
| Polymer D - 76 | 2 | 29,7 | AM | 69,3 | VPS | 1,00 | - | - | - | - | NaOH | 11,3 | AIBN | 1,40 | 223 |
| Polymer D - 77 | 2 | 34,6 | AM | 64,4 | VPS | 1,00 | - | - | - | - | NaOH | 12,8 | AIBN | 1,40 | 207 |
| Polymer D - 78 | 2 | 39,6 | AM | 59,4 | VPS | 1,00 | - | - | - | - | NaOH | 14,2 | AIBN | 1,40 | 216 |
| Polymer D - 79 | 2 | 44,5 | AM | 54,5 | VPS | 1,00 | - | - | - | - | NaOH | 15,1 | AIBN | 1,40 | 218 |
| Polymer D - 80 | 9 | 29,7 | AM | 69,3 | VPS | 1,00 | - | - | - | - | NaOH | 11,3 | AIBN | 1,40 | 207 |
| Polymer D - 81 | 9 | 34,6 | AM | 64,4 | VPS | 1,02 | - | - | - | - | NaOH | 12,8 | AIBN | 1,40 | 221 |
| Polymer D - 82 | 9 | 39,6 | AM | 59,4 | VPS | 1,03 | - | - | - | - | NaOH | 14,2 | AIBN | 1,40 | 216 |
| Polymer D - 83 | 9 | 44,5 | AM | 54,5 | VPS | 1,05 | - | - | - | - | NaOH | 15,2 | AIBN | 1,40 | 211 |
| Polymer D - 84 | 15 | 28,2 | AM | 65,9 | VPS | 0,87 | VIMA | 5,00 | - | - | NaOH | 11,3 | AIBN | 1,40 | 236 |
| Polymer D - 85 | 15 | 32,9 | AM | 61,2 | VPS | 0,97 | VIMA | 5,00 | - | - | NaOH | 12,8 | AIBN | 1,40 | 238 |

ACDMT = Acryloyldimethyltaurat, VPS, Vinylphosphonsäure, VSS= Vinylsulfonsäure, AMPP= 2-Acrylamido-2-methylpropanphosphonsäure, SSS = Styrolsulfonsäure, NaSS = Natirum-Styrolsulfonsäure ACT = Acryloyltaurat, ACNMT = Acryloyl-N-methyltaurat, NVP = N-Vinyl-2-pyrrolidon, Am = Acrylamid, DMAAm = Dimethylacrylamid, NVF = N-Vinylformaid, VIMA = N-Vinyl-N-Methylacetamid, AS = Acylsäure, MAS = Methacrylsäure, AIBN = Azobis(isobutyronitril)

Vergleichsbeispiel 1:

(nicht erfindungsgemäß, hergestellt gemäß EP-1045869 Copolymerisat hergestellt in Fällungspolymerisation 44,5 mol-% Acryloyldimethyltaurat und 55,5 mol-% Acrylamid mit Ammoniakgas als Neutralisierungsreagenz)

In einem 3 Liter Quickfitkolben mit Ankerrührer, Rückflusskühler mit Abgaswäscher, kombiniertes Thermometer/pH-Meter und einem Gaseinleitungsrohr werden 1700 g wasserfreies 2-Methylpropan-2-ol mit 50 ml destilliertem Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 245 g Acryloyldimethyltaurat eingetragen. Das Acryloyldimethyltaurat löst sich im 2-Methylpropan-2-ol / Wasser Gemisch nicht vollständig auf und liegt teilweise als Feststoffdispersion vor. Der pH-Wert dieses Gemisches liegt unterhalb von pH 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Bereichs wird noch 1 Stunde nachgerührt und der pH-Wert kontinuierlich erfasst. Das Reaktionsgefäß wird mit Stickstoff überschichtet und es werden 105 g Acrylamid eingetragen. Nach Eintrag des Acrylamids wird erneut der pH-Wert kontrolliert und gegebenenfalls in den Bereich pH 7 bis 8 korrigiert. Es wird mindestens 1 Stunde ein konstanter Stickstoffstrom durch die Lösung geleitet. Nach dieser Inertisierungszeit wird der Restsauerstoff durch eine Sauerstoffelektrode überprüft. Sollte der gemessene Wert an Restsauerstoff in der flüssigen Phase den Wert 1 ppm übersteigen, muss erneut inertisiert werden, bis dieser Wert erreicht wird. Danach werden im leichten Stickstoffstrom 2 g AIBN zugegeben und der Reaktionskessel auf 60 °C erwärmt. Kurz nach Erreichen einer Innentemperatur von 60 °C wird das Einleiten von Stickstoffgas beendet und ein Start der Polymerisationsreaktion beobachtet, was durch eine Temperaturerhöhung von 10 - 15 °C festgestellt werden kann. Ungefähr 5 - 15 Minuten nach Einsetzen der Polymerisationsreaktion ist das Temperaturmaximum überschritten und die Temperatur im Reaktionsgefäß wird durch das Heizbad bis zum Siedepunkt des 2-Methylpropan-2-ol / Wasser Gemisches erhöht. Unter leichten Rückfluss wird die nun viskose Masse zwei Stunden nachgerührt. Das Reaktionsprodukt, welches als viskose Suspension von Polymer im 2-Methylpropan-2-ol / Wasser Gemisch vorliegt, wird durch abfiltrieren und anschließender Trocknung im Vakuumtrockenschrank abgetrennt.

| | |
|---|---|
| Ausbeute: 365 g | |
| Trockengehalt (IR-Trockner 15 Minuten bei 120 °C): | 96 % |
| K-Wert (0,5 %ige Lösung in destillierten Wasser): | 212 |

Vergleichsbeispiel 2 gemäß EP-1033378 nicht erfindungsgemäß

In einem Polymerisationskolben von 2 l Inhalt, ausgestattet mit Rührer, Rückflusskühler, Tropftrichter, Gaseinleitungsrohr und elektrisch beheiztem Wasserbad werden 600 ml 2-Methylpropan-2-ol vorgeleitet und darin 77,5 g Acryloyldimethyl-taurat unter Rühren suspendiert, dann werden 8,5 l $NH_3$-Gas eingeleitet und anschließend 7,5 g Acrylamid, 7,5 g N-Vinylformamid und 7,5 g N-Vinyl-Pyrrolidon zugegeben. Unter Einleiten von Stickstoff wird mit dem elektrischen Wasserbad das Reaktionsgemisch auf 50 °C geheizt und 1,0 g Azoisobutyronitril zugesetzt. Nach einer Induktionszeit von ca. 2 Stunden setzt die Polymerisation ein, die Reaktionstemperatur steigt bis auf 70 °C an und das Polymerisat fällt aus. Es wird noch 2 Stunden bei 80 °C nachgeheizt, wobei eine dickflüssige Suspension entsteht. Das Polymer kann durch Absaugen und Trocknen unter Vakuum bei 50 °C isoliert werden. Es kann jedoch auch das Lösungsmittel direkt unter vermindertem Druck aus dem Reaktionsgemisch abdestilliert werden. Man erhält das Polymer in Form eines weißen leichten Pulvers, das sich in Wasser gut löst. K-Wert nach Fikentscher 170.

Vergleichsbeispiel 2-1 bis 2-4 nach US-2012/0095120 nicht erfindungsgemäß

In einen 2L Glasreaktor mit einer Innentemperatur von 20 °C werden 344 g Dimethyl-keton 9,6 g deionisiertes Wasser und die in Tabelle 2 angegebenen Monomere und das Neutralisierungsreagenz vorgelegt. Der Reaktorinhalt wird gerührt und unter starken Stickstoffeinleitung für 1 h inertisiert. Das Reaktionsmedium wird auf 55 °C erhitzt und dann werden 0,7 g DLP (Dilaurylperoxid) zum Start der Polymerisation hinzugegeben. Die Reaktionsmischung wird auf Rückfluss erhitzt und für 2 h gehalten. Nach dem Abkühlen auf Raumtemperatur wird das Reaktionsmedium filtriert und der Polymerrückstand unter Vakuum getrocknet.

Tabelle 2: Vergleichsbeispiel 2-1 bis 2-4 nach US-2012/0095120 nicht erfindungsgemäß

| Bezeichnung | ACDMT | Co-Monomer-1 | | Co-Monomer-2 | | Co-Monomer-3 | | Neutralisierungs-Mittel | | Initiator | | k-Wert |
|---|---|---|---|---|---|---|---|---|---|---|---|---|
| | / Mol-% | Name | / Mol-% | Name | / Mol-% | Name | / Mol-% | Name | /g | Name | /g | |
| VGP-2-1 | 62,3 | AM | 34,1 | NVP | 3,63 | - | - | $NaHCO_3$ | 32,4 | DLP | 0,7 | 130 |
| VGP-2-2 | 68,8 | AM | 11,8 | NVP | 7,55 | NVF | 11,81 | $NaHCO_3$ | 34,5 | DLP | 0,7 | 123 |
| VGP-2-3 | 44,5 | AM | 55,5 | - | - | - | - | $NaHCO_3$ | 28,4 | DLP | 0,7 | 119 |
| VGP-2-4 | 43,6 | AM | 54,4 | VPS | 2,00 | - | - | $NaHCO_3$ | 29,7 | DLP | 0,7 | 110 |
| ACDMT = Acryloyldimethyltaurat, VPS, Vinylphosphonsäure, NVP = N-Vinyl-2-pyrrolidon, Am = Acrylamid, NVF = N-Vinylformaid, DLP = Dilaurylperoxid | | | | | | | | | | | | |

B) Anwendungstests Zementschlämme

Die Ausprüfung erfolgt gemäß API spec. 10. Im atmosphärischen Konsistometer wird der Zementschlamm bei Untersuchungstemperatur gerührt/konditioniert und dann bei gleicher Temperatur die Rheologie mit dem FANN Viskosimeter Modell 35SA (bei Hochtemperatur wird bei 93 °C konditioniert und die Viskosität gemessen). Bei Temperaturen > 93 °C wird der Wasserverlust mit einem Stirring Fluid Loss Apparatus (SFLA) gemessen.

Die Tabelle 3 zeigt die wasserverlustreduzierenden Eigenschaften von ausgewählten oben genannten Beispielen laut API spec. 10 bei 121,1 °C (250 °F) im gerührten Filtrationstest in der FANN HTHP Filterpresse (Stirring Fluid Loss Apparatus, SFLA).

Bei dem Test wurden zwei Bewertungsfragen zu Grunde gelegt: Wurde Ammoniak Gas während dem Ansetzung der Formulierung emittiert und konnten die Wasserverlustreduzierungseigenschaften der Polymere C verbessert werden? Deutlich wird dabei, dass mit den Polymeren D keine Ammoniak Gas Emission mehr auftritt. Der direkte Vergleich der Polymere D gegenüber dem Stand der Technik zeigt ebenfalls eine Verbesserung der Fluid Loss Eigenschaften. Das Polymer der EP-1045869 wies durchschnittlich einen Fluid Loss von 52 ml (Mittelwert aus drei Messungen) im durchgeführten Test auf. Die Polymere D lagen teilweise deutlich geringer in ihren Fluid Loss Werten. Hier wurden Werte von 40 bis 45 ml erreicht.

Formulierung der Zementschlämme:

600 g Dyckerhoff Glass G Cement
210 g Silica Flour
328,8 g Destilliertes Wasser
Polymer in der in Tabelle 1 in der angegebenen Konzentration
1,8 g Dispersant (Polynaphthalinsulfonat, PNS)
1,8 g Retarder (Ligninsulfonat)

Tabelle 3: (Anwendungstest bei 250 °F (121,1 °C))

| Polymer aus Tabelle 1 | Ammoniak Freisetzung in Formulierung | Konz. | Rheologie nach dem Mischen bei 75 °F (24 °C), Skalenteile bei X Umdrehungen pro Minute Umdrehungen pro Minute /rpm | | | | | API Fluid Loss |
|---|---|---|---|---|---|---|---|---|
| | | / Gew.-% | 300 | 200 | 100 | 6 | 3 | /ml |
| VGP-1 gemäß EP1045869 | Ja | 0,5 | 168 | 117 | 64 | 7,5 | 5,0 | 60 |
| VGP-1 gemäß EP1045869 | Ja | 0,5 | 165 | 118 | 66 | 7 | 5,5 | 58 |
| VGP-1 gemäß EP1045869 | Ja | 0,5 | 167 | 117 | 64 | 7,5 | 5,5 | 62 |
| VGP-2-1 gemäß US-2012/0095120 | Nein | 0,5 | 124 | 93 | 48 | 5 | 3 | 128 |
| VGP-2-2 gemäß US-2012/0095120 | Nein | 0,5 | 133 | 105 | 52 | 6 | 3 | 98 |
| VGP-2-3 gemäß US-2012/0095120 | Nein | 0,5 | 83 | 57 | 28 | 4 | 2 | 80 |
| VGP-2-4 gemäß US-2012/0095120 | Nein | 0,5 | 86 | 61 | 35 | 5 | 1 | 76 |
| Polymer - D 2 | Nein | 0,5 | 173 | 125 | 63 | 7 | 5 | 46 |
| Polymer - D 4 | Nein | 0,5 | 171 | 121 | 67 | 7,5 | 5 | 48 |

(fortgesetzt)

| Polymer aus Tabelle 1 | Ammoniak Freisetzung in Formulierung | Konz. | Rheologie nach dem Mischen bei 75 °F (24 °C), Skalenteile bei X Umdrehungen pro Minute Umdrehungen pro Minute /rpm | | | | | API Fluid Loss |
|---|---|---|---|---|---|---|---|---|
| | | / Gew.-% | 300 | 200 | 100 | 6 | 3 | /ml |
| Polymer - D 6 | Nein | 0,5 | 174 | 119 | 65 | 7 | 4 | 52 |
| Polymer - D 7 | Nein | 0,5 | 173 | 120 | 62 | 7 | 5 | 50 |
| Polymer - D 11 | Nein | 0,5 | 168 | 117 | 60 | 6 | 4 | 54 |
| Polymer - D 12 | Nein | 0,5 | 176 | 123 | 69 | 8 | 6 | 52 |
| Polymer - D 16 | Nein | 0,5 | 184 | 131 | 73 | 11 | 7 | 46 |
| Polymer - D 17 | Nein | 0,5 | 188 | 137 | 78 | 12 | 8 | 46 |
| Polymer - D 22 | Nein | 0,5 | 219 | 151 | 81 | 10 | 4 | 42 |
| Polymer - D 25 | Nein | 0,5 | 218 | 168 | 102 | 32 | 27 | 54 |
| Polymer - D 37 | Nein | 0,5 | 168 | 117 | 64 | 8 | 5 | 54 |
| Polymer - D 38 | Nein | 0,5 | 164 | 113 | 62 | 7 | 4 | 48 |
| Polymer - D 39 | Nein | 0,5 | 166 | 115 | 67 | 6 | 5 | 52 |
| Polymer - D 45 | Nein | 0,5 | 91 | 63 | 34 | 5 | 3 | 54 |
| Polymer - D 46 | Nein | 0,5 | 76 | 54 | 32 | 5 | 3 | 44 |
| Polymer - D 48 | Nein | 0,5 | 68 | 50 | 25 | 4 | 2 | 52 |
| Polymer - D 49 | Nein | 0,5 | 70 | 49 | 27 | 3 | 2 | 54 |
| Polymer - D 51 | Nein | 0,5 | 75 | 55 | 31 | 4 | 4 | 46 |
| Polymer - D 59 | Nein | 0,5 | 81 | 59 | 35 | 5 | 4 | 44 |
| Polymer - D 68 | Nein | 0,5 | 73 | 51 | 34 | 6 | 4 | 54 |

Wie der Vergleich der erfindungsgemäßen Beispiele in Tabelle 3 mit den Vergleichsbeispielen VGP -2, VGP-2-1 bis VGP-2-4 zeigt, wird mit dem erfindungsgemäßen Verfahren, das ein Lösemittelgemisch nutzt, ein Produkt erhalten welches sich von Produkten unterscheidet, die nach dem Stand der Technik mit nur einem Lösemittel erhalten wurden. Die nach dem erfindungsgemäßen Verfahren erhaltenen Produkte zeigen einen geringeren Wasserverlust, wenn sie als Additiv in Zementschlämmen und Bohrspülung eingesetzt werden.

Anwendungstests Bohrspülungen

In den nachfolgenden Beispielen werden die Polymere C mit dem in Stand der Technik bekannten Vergleichspolymer 2 aus EP-10033378 in einer mit Schwerspat beschwerten Meerwasser-Bohrspülung mit 3 % KCl und einem spezifischem Gewicht von 2,1 kg/l verglichen. Vor der Verwendung wird eine Bohrspülung mit Natriumhydroxid auf einen pH-Wert von 9-11 eingestellt. Die Einsatzmenge betrug jeweils 2,5 Gew.-%.

Die Güte der Spülung und damit die Wirksamkeit der Additive wird nach folgenden Kriterien bewertet:

a) Fluid loss nach 30 Minuten in einer HTHP-Filterpresse bei 150 °C und einem Druck von 500 psi (35 bar) nach 16 h bzw. 66 h dynamische Alterung der Spülung im Rollerofen bei 130, 150, 170, 185 und 200 °C

b) Rheologie (plastische Viskosität [PV], Yield point [YP], Gelstärken [Gest.] nach 10 Sekunden [10"] und 10 Minuten [10']) gemessen im Fann-35 Rotationsviskosimeter nach dem Anmischen sowie nach 16 h bzw. 66 h dynamischer Alterung im Rollerofen bei 130, 150, 170, 185 und 200 °C.

Für die Untersuchungen wurden folgende Additive verwendet:

a) VGP-2
b) Polymer D-5 (aus Tabelle 1)
c) Polymer D-8 (aus Tabelle 1)
d) Polymer D-47 (aus Tabelle 1)
e) Polymer D-52 (aus Tabelle 1)
f) Polymer D-34 (aus Tabelle 1)
g) VGP-2-3 (aus Tabelle 2)
h) VGP-2-4 (aus Tabelle 2)

Tabelle 4

| Polymer | Alterung/ h | vor | 16 | 16 | 16 | 66 | 16 |
|---|---|---|---|---|---|---|---|
| | Temperatur /°C | | 130 | 150 | 170 | 170 | 200 |
| VGP-2 | Fluid Loss /ml | | 44 | 46 | 22 | 19 | 27 |
| | PV (cp) | 76 | 85 | 74 | 83 | 74 | 56 |
| | YP/lb/100ft$^2$ | 27 | 31 | 34 | 22 | 8 | 6 |
| | 10" Gest. | 5 | 8 | 9 | 7 | 3,5 | 5 |
| | 10' Gest. | 12 | 14 | 12 | 10 | 6 | 5 |
| VGP-2-3 gemäß US-2012/0095120 | Fluid Loss /ml | | 87 | 76 | 73 | 89 | 124 |
| | PV (cp) | 104 | 117 | 103 | 83 | 66 | 78 |
| | YP/lb/100ft$^2$ | 10 | 13 | 11 | 9 | 5 | 5 |
| | 10" Gest. | 5 | 10 | 7 | 5 | 3 | 3 |
| | 10' Gest. | 11 | 13 | 21 | 25 | 33 | 3 |
| VGP-2-4 gemäß US-2012/0095120 | Fluid Loss /ml | | 66 | 63 | 53 | 74 | 97 |
| | PV (cp) | 96 | 101 | 93 | 74 | 68 | 63 |
| | YP/lb/100ft$^2$ | 15 | 19 | 13 | 9 | 6 | 6 |
| | 10" Gest. | 10 | 12 | 12 | 10 | 7 | 7 |
| | 10' Gest. | 12 | 15 | 17 | 23 | 18 | 21 |
| Polymer D-5 | Fluid Loss/ml | | 16 | 18 | 19 | 19 | 24 |
| | PV (cp) | 72 | 75 | 61 | 49 | 27 | 13 |
| | YP/lb/100ft$^2$ | 43 | 19 | 19 | 20 | 17 | 8 |
| | 10" Gest. | 18 | 14 | 12 | 11 | 8 | 7 |
| | 10' Gest. | 21 | 17 | 16 | 17 | 12 | 13 |
| Polymer D-8 | Fluid Loss/ml | | 17 | 19 | 21 | 24 | 27 |
| | PV (cp) | 69 | 73 | 58 | 46 | 25 | 14 |
| | YP/lb/100ft$^2$ | 43 | 19 | 19 | 20 | 17 | 8 |
| | 10" Gest. | 16 | 13 | 11 | 10 | 9 | 3 |
| | 10' Gest. | 20 | 17 | 15 | 15 | 14 | 5 |
| Polymer D-47 | Fluid Loss/ml | | 23 | 24 | 22 | 18 | 26 |
| | PV (cp) | 86 | 82 | 82 | 69 | 54 | 45 |
| | YP/lb/100ft$^2$ | 42 | 17 | 19 | 20 | 17 | 10 |
| | 10" Gest. | 12 | 9 | 11 | 10 | 9 | 3 |
| | 10' Gest. | 15 | 13 | 15 | 15 | 14 | 9 |

(fortgesetzt)

| Polymer | Alterung/ h | vor | 16 | 16 | 16 | 66 | 16 |
|---|---|---|---|---|---|---|---|
| | Temperatur /°C | | 130 | 150 | 170 | 170 | 200 |
| Polymer D-52 | Fluid Loss /ml | | 24 | 21 | 23 | 25 | 25 |
| | PV (cp) | 89 | 91 | 78 | 65 | 45 | 30 |
| | YP/lb/100ft$^2$ | 43 | 19 | 19 | 20 | 17 | 8 |
| | 10" Gest. | 16 | 13 | 11 | 10 | 9 | 3 |
| | 10' Gest. | 20 | 17 | 15 | 15 | 14 | 5 |
| Polymer D-34 | Fluid Loss/ml | | 16 | 17 | 17 | 20 | 19 |
| | PV (cp) | 55 | 44 | 42 | 39 | 45 | 53 |
| | YP/lb/100ft$^2$ | 38 | 37 | 38 | 30 | 27 | 16 |
| | 10" Gest. | 5 | 11 | 12 | 13 | 11 | 9 |
| | 10' Gest. | 10 | 15 | 13 | 16 | 12 | 11 |

Die Prüfungsergebnisse zeigen vergleichbare Werte zu dem Vergleichsbeispiel 2, hinsichtlich der gleichmäßigen rheologischen Eigenschaften der Bohrspülung nach dem Anmischen und nach Alterung über den Temperaturbereich von 130 bis 200 °C. Die Polymere D haben einen breiten Temperaturbereich hinsichtlich ihrer Wirkung als Fluid loss Additiv.

Wie der Vergleich der erfindungsgemäßen Beispiele in Tabelle 4 mit den Vergleichsbeispielen VGP -1, VGP-2-1 bis VGP-2-4 zeigt, wird mit dem erfindungsgemäßen Verfahren, das ein Lösemittelgemisch nutzt, ein Produkt erhalten welches sich von Produkten unterscheidet, die nach dem Stand der Technik mit nur einem Lösemittel erhalten wurden. Die nach dem erfindungsgemäßen Verfahren erhaltenen Produkte zeigen einen geringeren Wasserverlust, wenn sie als Additiv in Zementschlämmen und Bohrspülung eingesetzt werden.

Vergleichsbeispiele gegenüber WO-99/26991

Das Verfahren der WO-99/26991 wird in einem 2-Methyl-2-Propanol / Wassergemisch durchgeführt und nach der allgemeinen Verfahrensbeschreibung auf Seite 10 Zeile 4 bis Seite 11 Zeile 22 wird durch den Zusatz von Natriumcarbonat ein entsprechendes Natriumsalz erhalten.

Die Aufgabe des erfindungsgemäßen Verfahrens war die Herstellung von polymeren AMPS-Na Salzen, die in besondere Weise als Wasserverlustreduzierer in Bohrspülungen und als Additive für die Zementierung von Tiefbohrungen geeignet sind und zudem bessere Eigenschaften als Wasserverlustreduzierer, als die beschriebenen Polymere des Stands der Technik. Diese polymeren AMPS-Na Salzen aus dem erfindungsgemäßen Verfahren sollen frei von Ammonium Ionen sein, die im alkalischen Milieu toxisches Ammoniakgas freisetzen. Es konnte bereits in den Vergleichsbeispielen 1 und 2 eindeutig belegt werden, dass polymere AMPS-Na Salze, hergestellt mittels einer Fällungspolymerisation, in einem 2-Methyl-2-Propanol / Wassergemisch schlechtere wasserverlustreduzierende Eigenschaften in Bohrspülungen aufweisen als die Polymere des erfindungsgemäßen Verfahrens. Aus diesen Ergebnissen der Vergleichsbeispiele 1 und 2 in der vorliegenden Anmeldung kann gefolgert werden, dass das Beispiel 2 aus der WO-99/26991 zu einer ähnlichen Verschlechterung der wasserverlustreduzieren Eigenschaften kommen wird.

Um diese These zu überprüfen wurden im Folgenden Beispiel 2 aus WO-99/26991 zweimal nach dem beschriebenen Verfahren wiederholt und mit den Polymeren aus dem Erfindungsgemäßen Verfahren verglichen:

Vergleichsbeispiele nach WO-99/26991 Beispiel 2:

In einem 3 Liter Quickfitkolben mit Ankerrührer, Rückflusskühler und Abgaswäscher, kombiniertes Thermometer / pH-Meter und einem Gaseinleitrohr werden 1700 g tert.-Butanol vorgelegt und mit 50 ml destilliertem Wasser versetzt. Das Reaktionsgefäß befindet sich in einem Heizbadthermostaten.

Dieses Reaktionsgefäß wird mit Stickstoff überschichtet und im leichten Stickstoffgegenstrom 245 g Acrylamido-2-methylpropansulfonsäure eingetragen. Die Acrylamido-2-methylpropansulfonsäure löst sich nicht vollständig auf und liegt teilweise als Feststoffdispersion vor. Der pH-Wert dieser Mischung liegt unterhalb von 1. Es werden 140,5 g Natriumcarbonat zudosiert. Das Reaktionsgefäß wird wieder mit Stickstoff überschichtet und es werden 105 g Acrylamid

eingetragen. Es wird für mindestens 1 Stunde ein konstanter Stickstoffstrom durch die Lösung geleitet. Danach werden im leichten Stickstoffstrom 1,5 g AIBN zugegeben und der Reaktionskessel auf 60 °C erwärmt. Kurz nach dem Erreichen einer Innentemperatur von 60 °C wird das Einleiten von Stickstoffgas beendet und die Polymerisationsreaktion startet typischerweise nach einigen Minuten, was durch eine Temperaturerhöhung 10 - 15 °C festgestellt werden kann. Ungefähr 30 Minuten nach Einsetzen der Polymerisationsreaktion ist das Temperaturmaximum überschritten und die Temperatur im Reaktionsgefäß wird durch das Heizbad bis zum Siedepunkt des tert.-Butanol / Wassergemisch erhöht. Unter leichtem Rückfluss wird die nun viskose Masse zwei Stunden nachgerührt Das Reaktionsprodukt, welches als viskose Suspension von Polymer im tert.-Butanol vorliegt wird durch Filtration vom tert.-Butanol abgetrennt und im Vakuumtrockenschrank getrocknet.

Ausbeute: ca. 383 g Polymer D3 -1
Trockengehalt 97 Gew.-%
k-Wert einer 0,5 Gew.-% Lösung: 148
Ausbeute: ca. 377 g Polymer D3 -2
Trockengehalt 95,8 Gew.-%
k-Wert einer 0,5 Gew.-% Lösung: 164

Anmerkung zum beschriebenen Polymerisationsverfahren nach WO-99/26991 Beispiel 2:

In WO-99/26991 wurde auf Seite 11, Zeile 17 - 20 beschrieben, dass nach der Zugabe von Natriumcarbonat der pH-Wert der Dispersion im Bereich zwischen 7 und 8 liegt. Dies konnte bei der Nachstellung nicht beobachtet werden. Es konnte auch keine $CO_2$-Gasentwicklung, wie es in dem erfindungsgemäßen Verfahren auftritt, durch die Neutralisationsreaktion zwischen dem Natriumcarbonat und der Sulfonsäure nach der Zugabe beobachtet werden. Auch nach der geforderten Stunde Inertisierungszeit war keine pH- Änderung ersichtlich. Das in WO-99/26991 beschriebene zweifache molare Verhältnis an Natriumcarbonat (Verhältnis Sulfonsäure zu $Na^+$-Ionen entspricht 1 mol zu 2,2 mol) änderte daran nichts. Die Analyse der Polymere D3 -1 und Polymer D3 -2 zeigte, dass noch ein Großteil des nicht abreagierten Natriumcarbonates im Polymer verblieben ist.

Die angegebene Ausbeute in WO-99/26991 Beispiel 2 mit 380 g Polymer (WO-99/26991, Seite 11, Zeile 19) belegt einen unvollständigen Umsatz, da bei einem 100%igen Umsatz der Monomere 1,3 mol (270,5 g) Natrium-acrylamido-2-methylpropan-sulfonsäure und 105 g Acrylamid im Polymer nach der Reaktion vorhanden sein können. Hinzu kommen 0,65 mol (68,9 g) nicht abreagiertes Natriumcarbonat welches in tert.-Butanol unlöslich ist. Bei einem vollständigen Umsatz der Monomere zum Polymer mit einem Trockengehalt von 94 Gew.-%, müsste demnach eine theoretische Gesamtausbeute von 472,77 g = ((270,5 + 105 g + 68,9) / 0,94)) im Verfahren nach WO-99/26991 ergeben.

Die Vergleichbeispiele D3 -1 und D3 -2 zeigten durch einen deutlich geringeren K-Wert als die Polymere nach dem erfindungsgemäßen Verfahren. Dies lässt zusammen mit der oben erwähnten reduzierten Ausbeute auf eine unvollständige Polymerisation schließen, da sich das Natriumsalz in Lösemittelgemisch des in dem beschrieben Verfahren der WO-99/26991 nur mäßig bis gar nicht löste und somit nicht für die Polymerisation zur Verfügung stand.
Acrylamid und Polyacrylamid sind hingeben ist sehr gut in tert.-Butanol löslich. Auch dies spricht für eine unvollständige Copolymerisation, da sowohl das Acrylamid als auch das Polyacrylamid durch den Filtrationsprozess entfernt worden sind und so die Masseverluste der Ausbeute erklären würden.

Anwendungstests Zementschlämme mit dem Polymer D3 -1 und D3 -2

Die Ausprüfung erfolgt gemäß API spec. 10. Im atmosphärischen Konsistometer wird der Zementschlamm bei Untersuchungstemperatur gerührt/konditioniert und dann bei gleicher Temperatur die Rheologie mit dem FANN Viskosimeter Modell 35SA (bei Hochtemperatur wird bei 93 °C konditioniert und die Viskosität gemessen). Bei Temperaturen > 93 °C wird der Wasserverlust mit einem Stirring Fluid Loss Apparatus (SFLA) gemessen.

Die Tabelle 5 zeigt die wasserverlustreduzierenden Eigenschaften von ausgewählten oben genannten Beispielen laut API spec. 10 bei 121,1 °C (250 °F) im gerührten Filtrationstest in der Fann HTHP Filterpresse (Stirring Fluid Loss Apparatus, SFLA). Formulierung der Zementschlämme für eine Anwendung bei 250 °F, ca. 121 °C:

100 g Dyckerhoff Glass G Cement
35 g Silica Flour
54,8 g destilliertes Wasser
Polymer in der in Tabelle 1a) bis 1c) in der angegebenen Konzentration
0,3 g Dispersant (Polynaphthalinsulfonat, PNS)
0,5 g Retarder (Ligninsulfonat)

Tabelle 5: (Anwendungstest bei 250 °F (121 °C))

| Polymer aus Tabelle 1a) bis 1c) | Konz. | Rheologie nach dem Mischen bei 80 °F (27 °C), Skalenteile bei X Umdrehungen pro Minute Umdrehungen pro Minute /rpm | | | | | API Fluid Loss bei 250 °F |
|---|---|---|---|---|---|---|---|
| | / Gew.-% | 300 | 200 | 100 | 6 | 3 | /ml |
| Vergleich D3 - 1 | 0,5 | 151 | 118 | 42 | 5 | 3,5 | >100 |
| Vergleich D3 - 2 | 0,5 | 162 | 137 | 56 | 6 | 4 | >100 |
| VERGLEICHBARE Polymere nach dem erfindungsgemäßen Verfahren | | | | | | | |
| Polymer - D 46 | 0,5 | 76 | 54 | 32 | 5 | 3 | 48 |
| Polymer - D 48 | 0,5 | 68 | 50 | 25 | 4 | 2 | 56 |
| Polymer - D 49 | 0,5 | 70 | 49 | 27 | 3 | 2 | 54 |
| Polymer - D 51 | 0,5 | 75 | 55 | 31 | 4 | 4 | 46 |
| Polymer - D 59 | 0,5 | 81 | 59 | 35 | 5 | 4 | 44 |
| Polymer - D 68 | 0,5 | 73 | 51 | 34 | 6 | 4 | 54 |

Zur Austestung der erhaltenen Polymere wurden diese als Wasserverlustreduzierer in Zementschlämmen eingesetzt. Durch den Einsatz des Natriumcarbonats konnten zwar keine Freisetzung von Ammoniak detektiert werden, doch zeigten die Vergleichsbeispiele D3 -1 und D3 -2 im Gegensatz zu den Polymeren des erfindungsgemäßen Verfahrens einen deutlich schlechteren "API Fluid Loss bei 250 °F" von >100 ml. Dies zeigt deutlich, dass das erfindungsgemäße Verfahren dem in WO-99/26991 beschriebenen Verfahren technologisch überlegen ist, und dass die erhaltenen Polymere des erfindungsgemäßen Verfahrens sich trotz gleicher Zusammensetzung durch Ihre verbesserten physikalischen Eigenschaften als Wasserverlustreduzierer deutlich hervorheben.

**Patentansprüche**

**1.** Verfahren zur Herstellung von wasserlöslichen oder wasserquellbaren Polymeren, enthaltend

a) 5 bis 98 Mol-%, vorzugsweise von 20 bis 80 Mol-% einer oder mehrerer wiederkehrender Struktureinheiten der Formel (1)

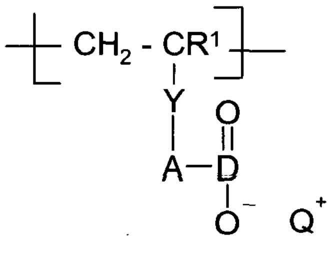

(1)

worin

$R^1$, $R^2$, $R^3$ Wasserstoff, Methyl oder Ethyl,
Y eine chemische Bindung, O, $CH_2$, $C(CH_3)H$, $C(O)NR^2$ bedeutet,
A eine chemische Bindung, O, Arylen, Phenylen, lineares oder verzweigtes $C_1$-$C_{12}$-Alkylen, eine lineare Mono-Hydroxyalkylengruppe mit 2 bis 6 Kohlenstoffatomen oder eine lineare oder verzweigte Di-Hydroxyalkylengruppe mit 3 bis 6 Kohlenstoffatomen bedeutet,
D S(O), POH, $POR^3$ oder $PO^-Q^+$ bedeutet
$Q^+$ für $H^+$, $Li^+$, $Na^+$, $K^+$, ½$Ca^{++}$, ½$Mg^{++}$, ½$Zn^{++}$, ⅓$Al^{+++}$, ¼$Zr^{++++}$- oder für Mischungen aus diesen Ionen

steht,

b) 2 bis 95 Mol-%, vorzugsweise 20 bis 80 Mol-% einer oder mehrerer voneinander unabhängiger wiederkehrender neutraler Struktureinheiten,

in dem die Monomere, aus denen sich die Struktureinheiten a) und b) ableiten, in einem polaren Lösungsmittel oder Lösungsmittelgemisch, in Fällung radikalisch polymerisiert werden, mit der Maßgabe, dass das polare Lösemittel oder Lösemittelgemisch 2-Methyl-2-propanol und ein $C_3$-$C_5$ Keton enthält.

2. Verfahren nach Anspruch 1, **dadurch gekennzeichnet, dass** die Struktureinheiten der Formel (1) abgeleitet sind von Monomeren aus der Gruppe bestehend aus Acryloyldimethyltaurat, Acryloyl-1,1-dimethyl-2methyltaurat, Acryloyltaurat, Acryloyl-N-methyltaurat, Vinylsulfonsäure, Styrolsulfonsäure, Vinylphosphonsäure, 2-Acrylamido-2-methylpropanphosphonsäure.

3. Verfahren nach Anspruch 1 und/oder 2, **dadurch gekennzeichnet, dass** der Neutralisationsgrad der Struktureinheiten nach Formel (1) von 50,0 bis 100 Mol-% beträgt.

4. Verfahren nach einem oder mehreren der Ansprüche 1 bis 3, **dadurch gekennzeichnet, dass** die Struktureinheiten b) von Monomeren aus der Gruppe bestehend aus N-Vinylformamid, N-Vinylacetamid, N-Methyl-N-Vinylformamid, N-Methyl-N-Vinylacetamid, N-Vinyl-2-pyrrolidon, N-Vinylcaprolactam, Vinylacetat, N,N-Dimethylacrylamid, N-Isopropylacrylamid, Acrylamid, Methylacrylat, abgeleitet sind.

5. Verfahren nach einem oder mehreren der Ansprüche 1 bis 4, **dadurch gekennzeichnet, dass** die Monomere, aus denen sich die Struktureinheiten a) ableiten vor der Polymerisation oder das Polymer nach der Polymerisation mit einer Base aus der Gruppe bestehend aus Natriumhydrogencarbonat, Natriumcarbonat, Natriumhydroxid, Kaliumhydrogencarbonat, Kaliumcarbonat, Kaliumhydroxid, Lithiumhydrogencarbonat, Lithiumcarbonat, Lithiumhydroxid Calciumhydrogencarbonat, Calciumcarbonat, neutralisiert werden.

6. Verfahren nach einem oder mehreren der Ansprüche 1 bis 5, **dadurch gekennzeichnet, dass** das polare Lösungsmittel einen Siedepunkt von 60 bis 110 °C aufweist.

7. Verfahren nach einem oder mehreren der Ansprüche 1 bis 6, **dadurch gekennzeichnet, dass** das polare Lösungsmittel ein Lösungsmittelgemisch ist, welches zwei oder mehr polare organische Lösemittel enthält.

8. Verfahren nach einem oder mehreren der Ansprüche 1 bis 7, **dadurch gekennzeichnet, dass** das polare Lösungsmittel 0,5 bis 10 Gew.-% Wasser; 1 bis 98,5 Gew.-% 2-Methylpropan-2-ol und 1 bis 98,5 Gew.-% Dimethylketon enthält.

9. Verfahren nach einem oder mehreren der Ansprüche 1 bis 8, **dadurch gekennzeichnet, dass** das polare Lösungsmittel 1 bis 5 Gew.-% Wasser, 7,5 bis 91,5 Gew.-% 2-Methylpropan-2-ol und 7,5 bis 91,5 Gew.-% Dimethylketon enthält.

10. Verfahren nach einem oder mehreren der Ansprüche 1 bis 9 **dadurch gekennzeichnet, dass** das polare Lösungsmittel nach dem Polymerisationsprozess durch eine Filtration, vorzugsweise Druckfiltration, oder Destillation vom Produkt abgetrennt wird.

## Claims

1. A process for preparing water-soluble or water-swellable polymers containing

a) 5 to 98 mol%, preferably from 20 to 80 mol%, of one or more repeat structural units of the formula (1)

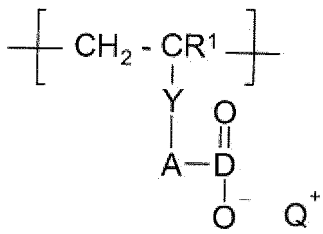

(1)

in which

- $R^1$, $R^2$, $R^3$ is hydrogen, methyl or ethyl,
- Y is a chemical bond, O, $CH_2$, $C(CH_3)H$, $C(O)NR^2$,
- A is a chemical bond, O, arylene, phenylene, linear or branched $C_1$-$C_{12}$-alkylene, a linear monohydroxyalkylene group having 2 to 6 carbon atoms or a linear or branched dihydroxyalkylene group having 3 to 6 carbon atoms,
- D is S(O), POH, $POR^3$ or $PO^-Q^+$,
- $Q^+$ is $H^+$, $Li^+$, $Na^+$, $K^+$, ½$Ca^{++}$, ½$Mg^{++}$, ½$Zn^{++}$, ⅓$Al^{+++}$, ¼$Zr^{++++}$ or is mixtures of these ions,

b) 2 to 95 mol%, preferably 20 to 80 mol%, of one or more mutually independent uncharged repeat structural units,

in which the monomers from which the structural units a) and b) derive are subjected to precipitative free-radical polymerization in a polar solvent or solvent mixture, with the proviso that the polar solvent or solvent mixture comprises 2-methyl-2-propanol and a $C_3$-$C_5$ ketone.

**2.** The process as claimed in claim 1, wherein the structural units of the formula (1) are derived from monomers from the group consisting of acryloyldimethyltaurate, acryloyl-1,1-dimethyl-2-methyltaurate, acryloyltaurate, acryloyl-N-methyltaurate, vinylsulfonic acid, styrenesulfonic acid, vinylphosphonic acid, 2-acrylamido-2-methylpropanephosphonic acid.

**3.** The process as claimed in claim 1 and/or 2, wherein the neutralization level of the structural units of formula (1) is from 50.0 to 100 mol%.

**4.** The process as claimed in one or more of claims 1 to 3, wherein the structural units b) are derived from monomers from the group consisting of N-vinylformamide, N-vinylacetamide, N-methyl-N-vinylformamide, N-methyl-N-vinylacetamide, N-vinyl-2-pyrrolidone, N-vinylcaprolactam, vinyl acetate, N,N-dimethylacrylamide, N-isopropylacrylamide, acrylamide, methyl acrylate.

**5.** The process as claimed in one or more of claims 1 to 4, wherein the monomers from which the structural units a) derive are neutralized prior to the polymerization, or the polymer is neutralized after the polymerization, with a base from the group consisting of sodium hydrogencarbonate, sodium carbonate, sodium hydroxide, potassium hydrogencarbonate, potassium carbonate, potassium hydroxide, lithium hydrogencarbonate, lithium carbonate, lithium hydroxide, calcium hydrogencarbonate, calcium carbonate.

**6.** The process as claimed in one or more of claims 1 to 5, wherein the polar solvent has a boiling point of 60 to 110°C.

**7.** The process as claimed in one or more of claims 1 to 6, wherein the polar solvent is a solvent mixture comprising two or more polar organic solvents.

**8.** The process as claimed in one or more of claims 1 to 7, wherein the polar solvent comprises 0.5% to 10% by weight of water, 1% to 98.5% by weight of 2-methylpropan-2-ol and 1% to 98.5% by weight of dimethyl ketone.

**9.** The process as claimed in one or more of claims 1 to 8, wherein the polar solvent comprises 1% to 5% by weight of water, 7.5% to 91.5% by weight of 2-methylpropan-2-ol and 7.5% to 91.5% by weight of dimethyl ketone.

**10.** The process as claimed in one or more of claims 1 to 9, wherein the polar solvent is separated from the product after the polymerization process by a filtration, preferably pressure filtration, or distillation.

## Revendications

**1.** Procédé de fabrication de polymères solubles dans l'eau ou pouvant gonfler dans l'eau, contenant :

a) 5 à 98 % en moles, de préférence 20 à 80 % en moles d'une ou de plusieurs unités structurales de répétition de formule (1)

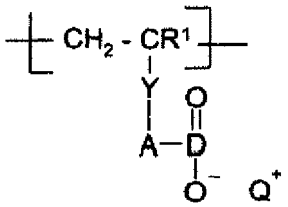

(1)

dans laquelle

$R^1$, $R^2$, $R^3$ signifient hydrogène, méthyle ou éthyle,
Y signifie une liaison chimique, O, $CH_2$, $C(CH_3)H$, $C(O)NR^2$,
A signifie une liaison chimique, O, arylène, phénylène, alkylène en $C_1$-$C_{12}$ linéaire ou ramifié, un groupe monohydroxyalkylène linéaire de 2 à 6 atomes de carbone, ou un groupe dihydroxyalkylène linéaire ou ramifié de 3 à 6 atomes de carbone,
D signifie S(O), POH, $POR^3$ ou $PO^-Q^+$,
$Q^+$ représente $H^+$, $Li^+$, $Na^+$, $K^+$, $½Ca^{++}$, $½Mg^{++}$, $½Zn^{++}$, $⅓\,Al^{+++}$, $¼Zr^{++++}$ ou des mélanges de ces ions,

b) 2 à 5 % en moles, de préférence 20 à 80 % en moles, d'une ou de plusieurs unités structurales de répétition neutres indépendantes les unes des autres, où les monomères desquels les unités structurales a) et b) dérivent sont polymérisés par voie radicalaire en précipitation dans un solvant ou mélange de solvants polaire, à condition que le solvant ou mélange de solvants polaire contient du 2-méthyl-2-propanol et une cétone en $C_3$-$C_5$.

**2.** Procédé selon la revendication 1, **caractérisé en ce que** les unités structurales de formule (1) sont dérivées de monomères du groupe constitué par le taurate d'acryloyldiméthyle, le taurate d'acryloyl-1,1-diméthyl-2-méthyle, le taurate d'acryloyle, le taurate d'acryloyl-N-méthyle, l'acide vinylsulfonique, l'acide styrène-sulfonique, l'acide vinylphosphonique, l'acide 2-acrylamido-2-méthylpropane-phosphonique.

**3.** Procédé selon la revendication 1 et/ou 2, **caractérisé en ce que** le degré de neutralisation des unités structurales selon formule (1) est de 50,0 à 100 % en moles.

**4.** Procédé selon une ou plusieurs des revendications 1 à 3, **caractérisé en ce que** les unités structurales b) sont dérivées de monomères du groupe constitué par le N-vinylformamide, le N-vinylacétamide, le N-méthyl-N-vinylformamide, le N-méthyl-N-vinylacétamide, la N-vinyl-2-pyrrolidone, le N-vinylcaprolactame, l'acétate de vinyle, le N,N-diméthylacrylamide, le N-isopropylacrylamide, l'acrylamide, l'acrylate de méthyle.

**5.** Procédé selon une ou plusieurs des revendications 1 à 4, **caractérisé en ce que** les monomères desquels les unités structurales a) dérivent avant la polymérisation ou le polymère après la polymérisation sont neutralisés avec une base du groupe constitué par l'hydrogénocarbonate de sodium, le carbonate de sodium, l'hydroxyde de sodium, l'hydrogénocarbonate de potassium, le carbonate de potassium, l'hydroxyde de potassium, l'hydrogénocarbonate de lithium, le carbonate de lithium, l'hydroxyde de lithium, l'hydrogénocarbonate de calcium, le carbonate de calcium.

**6.** Procédé selon une ou plusieurs des revendications 1 à 5, **caractérisé en ce que** le solvant polaire présente un point d'ébullition de 60 à 110 °C.

**7.** Procédé selon une ou plusieurs des revendications 1 à 6, **caractérisé en ce que** le solvant polaire est un mélange de solvants qui contient deux solvants organiques polaires ou plus.

**8.** Procédé selon une ou plusieurs des revendications 1 à 7, **caractérisé en ce que** le solvant polaire contient 0,5 à 10 % en poids d'eau, 1 à 98,5 % en poids de 2-méthylpropan-2-ol et 1 à 98,5 % en poids de diméthylcétone.

9. Procédé selon une ou plusieurs des revendications 1 à 8, **caractérisé en ce que** le solvant polaire contient 1 à 5 % en poids d'eau, 7,5 à 91,5 % en poids de 2-méthylpropan-2-ol et 7,5 à 91,5 % en poids de diméthylcétone.

10. Procédé selon une ou plusieurs des revendications 1 à 9, **caractérisé en ce que** le solvant polaire est séparé du produit après le procédé de polymérisation par une filtration, de préférence une filtration sous pression, ou une distillation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5472051 A
- EP 1045869 A
- EP 0116671 A
- US 5025040 A
- EP 0217608 A
- US 4555269 A
- EP 0157055 A
- EP 1059316 A
- US 5336316 A
- US 5373044 A
- US 2798053 A
- EP 301532 A
- EP 816403 A
- EP 1116733 A
- EP 1069142 A
- WO 2010108634 A
- WO 2012119747 A
- WO 2012119746 A
- EP 0816403 A
- EP 2227498 A
- US 7151137 B
- WO 0244268 A
- EP 1033378 A
- US 20120095120 A
- EP 10033378 A
- WO 9926991 A


### In der Beschreibung aufgeführte Nicht-Patentliteratur


- **BERND TIEKE.** Makromolekulare Chemie: Eine Einführung. Wiley-VCH, 09. September 2005, vol. 2